(19) **Europäisches Patentamt / European Patent Office / Office européen des brevets**

(11) **EP 4 391 679 A1**

(12) **EUROPEAN PATENT APPLICATION**
published in accordance with Art. 153(4) EPC

(43) Date of publication:
**26.06.2024 Bulletin 2024/26**

(21) Application number: **22857715.1**

(22) Date of filing: **12.08.2022**

(51) International Patent Classification (IPC):
**H04W 72/04** (2023.01)

(52) Cooperative Patent Classification (CPC):
**H04W 72/04**

(86) International application number:
**PCT/CN2022/112263**

(87) International publication number:
**WO 2023/020403 (23.02.2023 Gazette 2023/08)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **16.08.2021 CN 202110938636**

(71) Applicant: **Vivo Mobile Communication Co., Ltd.**
**Dongguan, Guangdong 523863 (CN)**

(72) Inventors:
- **WANG, Lihui**
  **Dongguan, Guangdong 523863 (CN)**
- **WU, Kai**
  **Dongguan, Guangdong 523863 (CN)**

(74) Representative: **Murgitroyd & Company**
**165-169 Scotland Street**
**Glasgow G5 8PL (GB)**

(54) **TRANSMISSION METHOD FOR PHYSICAL DOWNLINK CONTROL CHANNEL, AND TERMINAL AND NETWORK-SIDE DEVICE**

(57) This application discloses a physical downlink control channel transmission method, a terminal, and network-side device, and pertains to the field of wireless communication technologies. The physical downlink control channel transmission method in embodiments of this application includes: obtaining, by a network-side device, a control channel element (Control Channel Element, CCE)-resource element group (resource element group, REG) mapping type of a first target control resource set CORESET, where the CCE-REG mapping type is a non-interleaved mapping type; and transmitting, by the network-side device based on the CCE-REG mapping type being a non-interleaved mapping type, a first target physical downlink control channel PDCCH on a resource corresponding to the first target CORESET.

```
200
                                                          S210
┌─────────────────────────────────────────────────────┐
│ A network-side device obtains a CCE-REG mapping type  │
│ of a first target CORESET                              │
└─────────────────────────────────────────────────────┘
                          │
                          ▼                               S212
┌─────────────────────────────────────────────────────┐
│ The network-side device transmits, based on the       │
│ CCE-REG mapping type being a non-interleaved mapping   │
│ type, a first target PDCCH on a resource corresponding │
│ to the first target CORESET                            │
└─────────────────────────────────────────────────────┘
```

FIG. 2

**Description**

**CROSS-REFERENCE TO RELATED APPLICATION**

The present invention claims priority to Chinese Patent Application No. 202110938636.0, filed with the China National Intellectual Property Administration on August 16, 2021 and entitled "PHYSICAL DOWNLINK CONTROL CHANNEL TRANSMISSION METHOD, TERMINAL, AND NETWORK-SIDE DEVICE", which is incorporated herein by reference in its entirety.

**TECHNICAL FIELD**

This application pertains to the field of wireless communications technologies, and specifically, relates to a physical downlink control channel transmission method, a terminal, and a network-side device.

**BACKGROUND**

The minimum system bandwidth required in a range of frequency band 1 (FR1, that is, 410 MHz to 7125 MHz) in the existing new radio (New Radio, NR) system is 5 MHz, and this system bandwidth is the minimum bandwidth required in frequency domain to support a synchronization signal, broadcast channel, and control resource set (Control resource set, CORESET) with ID 0 (CORESET#0) required during initial access by a terminal currently.
In the future, the NR system will further evolve, and it is planned to make deployment in a system bandwidth less than 5 MHz. For example, the NR system will be used to support railway communication, smart grid control, and public safety on some special frequency spectrums of frequency division duplex (Frequency Division Duplex, FDD), and the special frequency spectrums are deployed on FDD sub1 GHz with a bandwidth of 3-5 MHz (for example, 3 MHz or 3.6 MHz). Therefore, the system bandwidth may not be able to support frequency domain resources of some CORESET.
In addition, in response to needs of vertical industries, in usage scenarios such as industrial wireless sensors, video surveillance, and wearable devices, complexity of terminals needs to be reduced in terms of the number of receive antennas, the number of transmit antennas, supported bandwidth, data and signal processing time and capabilities of the terminals, and so on, so that such terminals can be referred to as reduced capability UEs (Reduced Capability UE, RedCap device/UE or RedCap/redcap for short). In terms of bandwidth, the maximum bandwidth capacity that can be supported by the redcap UE at present is 20 MHz on FR1, and may be 5 MHz-10 MHz in subsequent systems. Therefore, the frequency domain resources of some CORESETs may exceed the maximum bandwidth that can be supported by the terminal.
At present, there is still no clear technical solution to physical downlink control channel (Physical downlink control channel, PDCCH) transmission between a network-side device and a terminal to adapt to the above two cases.

**SUMMARY**

Embodiments of this application provide a physical downlink control channel transmission method, a terminal, and a network-side device, so as to adapt to a case that a system bandwidth cannot support frequency domain resources of some CORESETs or that frequency domain resources of some CORESETs may exceed the maximum bandwidth supported by a terminal.
According to a first aspect, a physical downlink control channel transmission method is provided, including: obtaining, by a network-side device, a control channel element (Control Channel Element, CCE)-resource element group (resource element group, REG) mapping type of a first target control resource set CORESET, where the CCE-REG mapping type is a non-interleaved mapping type; and transmitting, by the network-side device based on the CCE-REG mapping type being a non-interleaved mapping type, a first target physical downlink control channel PDCCH on a resource corresponding to the first target CORESET.
According to a second aspect, a physical downlink control channel transmission method is provided, including: configuring, by a network-side device, a target parameter for a second target CORESET, where the target parameter includes a first parameter, and the first parameter is a reference parameter for determining by a terminal whether to receive a second target PDCCH; and transmitting, by the network-side device, the second target PDCCH on a resource of the second target CORESET.
According to a third aspect, a physical downlink control channel transmission method is provided, including: obtaining, by a network-side device, at least one CCE aggregation level from a plurality of target CCE aggregation levels of a target common search space (Common Search Space, CSS) set, where the target CSS set is configured through searchSpaceSIB1, and the plurality of target CCE aggregation levels include: level 1 and level 2; and transmitting, by the network-side device, a third target PDCCH on a resource of a third target CORESET based on the selected at least one CCE aggregation level; where the third target CORESET is associated with the target CSS set.

According to a fourth aspect, a physical downlink control channel reception method is provided, including: obtaining, by a terminal, a CCE-REG mapping type of a first target CORESET, where the CCE-REG mapping type includes: a non-interleaved mapping type; and in a case that a first target condition is met, receiving and demodulating, by the terminal based on the CCE-REG mapping type being a non-interleaved mapping type, a first target PDCCH transmitted on a resource corresponding to the first target CORESET.

According to a fifth aspect, a physical downlink control channel reception method is provided, including: obtaining, by a terminal, a target parameter for a second target CORESET, where the target parameter includes a first parameter, and the first parameter is a reference parameter for determining by the terminal whether to receive a second target PDCCH; and determining, by the terminal based on the first parameter, whether to receive the second target PDCCH transmitted on a resource of the second target CORESET.

According to a sixth aspect, a physical downlink control channel reception method is provided, including: performing, by the terminal, blind detection on a third target PDCCH based on a plurality of target CCE aggregation levels of a target CSS set, where the third target PDCCH is transmitted on a resource of a third target CORESET, the target CSS set is configured through searchSpaceSIB 1, the third target CORESET is associated with the target CSS set, and the plurality of target CCE aggregation levels include level 1 and level 2.

According to a seventh aspect, a physical downlink control channel reception method is provided, including: in a case that a fourth target PDCCH exceeds a target bandwidth, receiving and demodulating, by a terminal, a first portion of the fourth target PDCCH, and giving up receiving or demodulating a second portion of the fourth target PDCCH, where the first portion is a portion that is of the fourth target PDCCH and that is transmitted on the target bandwidth, and the second portion is a portion that is of the fourth target PDCCH and that is transmitted on a frequency domain resource beyond the target bandwidth; the target bandwidth includes a bandwidth of a frequency domain unit currently deployed in a communication system and/or the maximum bandwidth supported by the terminal, and the frequency domain unit includes one of the following: cell, carrier, frequency band, and bandwidth part (bandwidth part, BWP).

According to an eighth aspect, a physical downlink control channel transmission apparatus is provided, including: a first obtaining module, configured to obtain a CCE-REG mapping type of a first target CORESET, where the CCE-REG mapping type includes: a non-interleaved mapping type; and a first transmission module, configured to transmit, based on the CCE-REG mapping type being a non-interleaved mapping type, a first target physical downlink control channel PDCCH on a resource corresponding to the first target CORESET.

According to a ninth aspect, a physical downlink control channel transmission apparatus is provided, including: a second configuration module, configured to configure a target parameter for a second target CORESET, where the target parameter includes a first parameter, and the first parameter is a reference parameter for determining by a terminal whether to receive a second target PDCCH; and a second transmission module, configured to transmit the second target PDCCH on a resource of the second target CORESET.

According to a tenth aspect, a physical downlink control channel transmission apparatus is provided, including: a selection module, configured to select at least one CCE aggregation level from a plurality of target CCE aggregation levels of a target CSS set, where the target CSS set is configured through searchSpaceSIB1, and the plurality of target CCE aggregation levels include: level 1 and level 2; and a third transmission module, configured to transmit a third target PDCCH on a resource of a third target CORESET based on the selected at least one CCE aggregation level; where the third target CORESET is associated with the target CSS set.

According to an eleventh aspect, a physical downlink control channel reception apparatus is provided, including: a first obtaining module, configured to obtain a CCE-REG mapping type of a first target CORESET, where the CCE-REG mapping type includes: a non-interleaved mapping type; and a first receiving module, configured to: in a case that a first target condition is met, receive and demodulate, based on the CCE-REG mapping type being a non-interleaved mapping type, a first target PDCCH transmitted on a resource corresponding to the first target CORESET.

According to a twelfth aspect, a physical downlink control channel reception apparatus is provided, including: a second obtaining module, configured to obtain a target parameter for a second target CORESET, where the target parameter includes a first parameter, and the first parameter is a reference parameter for determining by a terminal whether to receive a second target PDCCH; and a second receiving module, configured to determine, based on the first parameter, whether to receive the second target PDCCH transmitted on a resource of the second target CORESET.

According to a thirteenth aspect, a physical downlink control channel reception apparatus is provided, including: a third obtaining module, configured to obtain a plurality of target CCE aggregation levels of a target CSS set, where the target CSS set is configured through search Space SIB 1, and the plurality of target CCE aggregation levels include level 1 and level 2; and a third receiving module, configured to perform blind detection on a third target PDCCH based on the plurality of target CCE aggregation levels, where the third target PDCCH is transmitted on a resource of a third target CORESET, and the third target CORESET is associated with the target CSS set.

According to a fourteenth aspect, a physical downlink control channel reception apparatus is provided, including: a determining module, configured to determine that a fourth target PDCCH exceed a target bandwidth, where the target bandwidth includes a bandwidth of a frequency domain unit currently deployed in a communication system and/or a maximum bandwidth supported by a terminal, and the frequency domain unit includes one of the following: cell, carrier, frequency band, and BWP; and a fourth receiving module, configured to: in a case that the fourth target PDCCH exceeds the target bandwidth, receive and demodulate a first portion of the fourth target PDCCH, and give up receiving or demodulating a second portion of the fourth target PDCCH, where the first portion is a portion that is of the fourth target PDCCH and that is transmitted on the target bandwidth, and the second portion is a portion that is of the fourth target PDCCH and that is transmitted on a frequency domain resource beyond the target bandwidth.

According to a fifteenth aspect, a terminal is provided, where the terminal includes a processor, a memory, and a program or instructions stored in the memory and executable on the processor, and when the program or the instructions are executed by the processor, the steps of the method according to the fourth aspect are implemented, or the steps of the method according to the fifth aspect are implemented, or the steps of the method according to the sixth aspect are implemented, or the steps of the method according to the seventh aspect are implemented.

According to a sixteenth aspect, a terminal is provided, including a processor and a communication interface, where the processor is configured to implement the steps of the method according to the fourth aspect, or the steps of the method according to the fifth aspect, or the steps of the method according to the sixth aspect, or the steps of the method according to the seventh aspect; and the communication interface is configured to communicate with a network-side device.

According to a seventeenth aspect, a network-side device is provided, where the network-side device includes a processor, a memory, and a program or instructions stored in the memory and executable on the processor, and when the program or the instructions are executed by the processor, the steps of the method according to the first aspect are implemented, or the steps of the method according to the second aspect are implemented, or the steps of the method according to the third aspect are implemented.

According to an eighteenth aspect, a network-side device is provided, including a processor and a communication interface, where the processor is configured to implement the steps of the method according to the first aspect, or the steps of the method according to the second aspect, or the steps of the method according to the third aspect; and the communication interface is configured to communicate with a terminal.

According to a nineteenth aspect, a readable storage medium is provided, where a program or instructions are stored in the readable storage medium, and when the program or the instructions are executed by a processor, the steps of the method according to the first aspect are implemented, or the steps of the method according to the second aspect are implemented, or the steps of the method according to the third aspect are implemented, or the steps of the method according to the fourth aspect are implemented, or the steps of the method according to the fifth aspect are implemented, or the steps of the method according to the sixth aspect are implemented, or the steps of the method according to the seventh aspect are implemented.

According to a twentieth aspect, a chip is provided, where the chip includes a processor and a communications interface. The communications interface is coupled to the processor, and the processor is configured to run a program or instructions to implement the steps of the method according to the first aspect, or the steps of the method according to the second aspect, or the steps of the method according to the third aspect, or the steps of the method according to the fourth aspect, or the steps of the method according to the fifth aspect, or the steps of the method according to the sixth aspect, or the steps of the method according to the seventh aspect.

According to a twenty-first aspect, a computer program/program product is provided, where the computer program/program product is stored in a non-transitory storage medium, and the program/program product is executed by at least one processor to implement the steps of the method according to the first aspect, or the steps of the method according to the second aspect, or the steps of the method according to the third aspect, or the steps of the method according to the fourth aspect, or the steps of the method according to the fifth aspect, or the steps of the method according to the sixth aspect, or the steps of the method according to the seventh aspect.

According to a twenty-second aspect, an electronic device is provided, where the electronic device is configured to implement the steps of the method according to the first aspect, or the steps of the method according to the second aspect, or the steps of the method according to the third aspect, or the steps of the method according to the fourth aspect, or the steps of the method according to the fifth aspect, or the steps of the method according to the sixth aspect, or the steps of the method according to the seventh aspect.

In the embodiments of this application, on one hand, the network-side device obtains the CCE-REG mapping type of the first target CORESET, where the CCE-REG mapping type is a non-interleaved mapping type; and the network-side device transmits the first target PDCCH on the resource corresponding to the first target CORESET based on the non-interleaved mapping type, so that all or most CCEs forming the first target PDCCH can be controlled to be within a receive bandwidth of the terminal, thereby guaranteeing the demodulation performance for the first target PDCCH.

On another hand, the network-side device may alternatively configure the target parameter for the second target CORESET, where the target parameter includes a reference parameter for determining by the terminal whether to receive the second target PDCCH, and the network-side device may transmit the second target PDCCH on the resource of the second target CORESET based on the reference parameter, so as to control a receive terminal of the second target PDCCH to receive the second target PDCCH.

On yet another hand, the network-side device may extend CCE aggregation levels of the CSS set configured through search Space SIB 1, and when the CCE aggregation levels of level 1 and level 2 is used, this can reduce a frequency domain resource occupied by the third target PDCCH that is transmitted on the resource of the third target CORESET associated with the CSS set, so that all or most CCEs forming the third target PDCCH are within the receive bandwidth of the terminal.

In addition, the embodiments of this application further describe how the terminal receives the PDCCH in a case that the fourth target PDCCH exceeds the bandwidth of the frequency domain unit currently deployed in the communication system and/or the maximum bandwidth supported by the terminal, so that the terminal can determine whether to receive and demodulate a PDCCH transmitted on a CORESET to reduce unnecessary complexity of the terminal.

## BRIEF DESCRIPTION OF DRAWINGS

FIG. 1 is a schematic diagram of a wireless communication system to which the embodiments of this application are applicable;

FIG. 2 is a schematic flowchart of a physical downlink control channel transmission method according to an embodiment of this application;

FIG. 3a is a schematic diagram of a CCE-to-REG mapping type;

FIG. 3b is another schematic diagram of a CCE-to-REG mapping type;

FIG. 4 is a schematic flowchart of a physical downlink control channel reception method according to an embodiment of this application;

FIG. 5 is another schematic flowchart of a physical downlink control channel transmission method according to an embodiment of this application;

FIG. 6 is another schematic flowchart of a physical downlink control channel reception method according to an embodiment of this application;

FIG. 7 is still another schematic flowchart of a physical downlink control channel transmission method according to an embodiment of this application;

FIG. 8 is still another schematic flowchart of a physical downlink control channel reception method according to an embodiment of this application;

FIG. 9 is still another schematic flowchart of a physical downlink control channel reception method according to an embodiment of this application;

FIG. 10 is a schematic structural diagram of a physical downlink control channel transmission apparatus according to an embodiment of this application;

FIG. 11 is another schematic structural diagram of a physical downlink control channel transmission apparatus according to an embodiment of this application;

FIG. 12 is still another schematic structural diagram of a physical downlink control channel transmission apparatus according to an embodiment of this application;

FIG. 13 is a schematic structural diagram of a physical downlink control channel reception apparatus according to an embodiment of this application;

FIG. 14 is another schematic structural diagram of a physical downlink control channel reception apparatus according to an embodiment of this application;

FIG. 15 is still another schematic structural diagram of a physical downlink control channel reception apparatus according to an embodiment of this application;

FIG. 16 is still another schematic structural diagram of a physical downlink control channel reception apparatus according to an embodiment of this application;

FIG. 17 is a schematic structural diagram of a communication device according to an embodiment of this application;

FIG. 18 is a schematic diagram of a hardware structure of a terminal according to an embodiment of this application; and

FIG. 19 is a schematic diagram of a hardware structure of a network-side device according to an embodiment of this application.

## DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

In the specification and claims of this application, the terms such as "first" and "second" are intended to distinguish between similar objects but do not necessarily indicate a specific order or sequence. It should be understood that the data used in this way is interchangeable in appropriate circumstances so that the embodiments of this application can be implemented in other orders than the order illustrated or described herein, and "first" and "second" are usually for distinguishing same-type objects but not limiting the number of objects, for example, there may be one or more first objects. In addition, "and/or" in this specification and claims indicates at least one of connected objects, and the symbol "/" generally indicates that the associated objects are in an "or" relationship.

It should be noted that techniques described in the embodiments of this application are not limited to a long term evolution (Long Term Evolution, LTE) or LTE-advanced (LTE-Advanced, LTE-A) system, and may also be applied to various wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. Techniques described herein may be used in the aforementioned systems and radio technologies, and may also be used in other systems and radio technologies. In the following descriptions, an NR system is described for an illustration purpose, and NR terms are used in most of the following descriptions, although these technologies may also be applied to other applications than an NR system application, for example, the 6th generation (6th Generation, 6G) communication system.

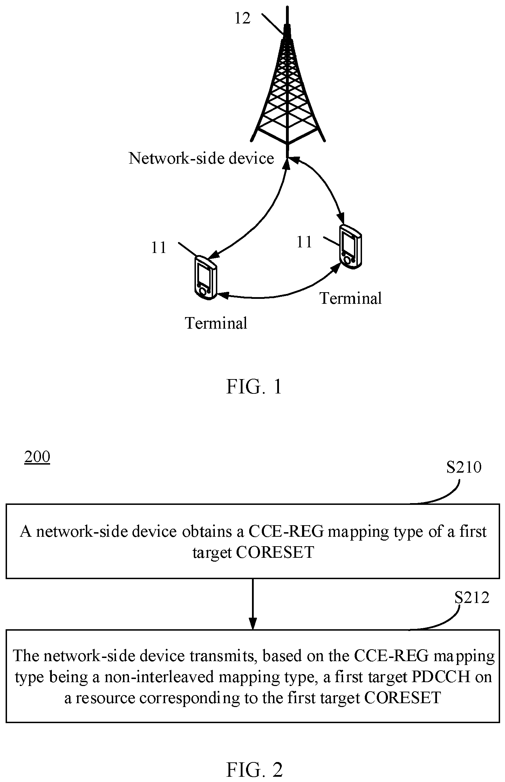

FIG. 1 is a block diagram of a wireless communication system to which the embodiments of this application are applicable. The wireless communication system includes a terminal 11 and a network-side device 12. The terminal 11 may also be referred to as a terminal device or user equipment (User Equipment, UE), and the terminal 11 may be a terminal-side device, such as a mobile phone, a tablet computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable Device) or vehicle user equipment (VUE), or pedestrian user equipment (PUE). The wearable device includes: a smart watch, a wrist band, earphones, glasses, or the like. It should be noted that a specific type of the terminal 11 is not limited in the embodiments of this application. The network-side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a wireless local area network (Wireless Local Area Networks, WLAN) access point, a Wi-Fi node, a transmission and reception point (Transmitting Receiving Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited.

The following describes in detail a physical downlink control channel transmission method according to the embodiments of this application by using some embodiments and application scenarios thereof with reference to the accompanying drawings.

FIG. 2 is a schematic flowchart of a physical downlink control channel transmission method according to an embodiment of this application. This method 200 may be executed by a network-side device, in other words, the method may be executed by software or hardware installed in the network-side device. As shown in FIG. 2, the method may include the following steps.

S210: The network-side device obtains a CCE-REG mapping type of a first target CORESET, where the CCE-REG mapping type includes a non-interleaved mapping type.

S212: The network-side device transmits, based on the CCE-REG mapping type being a non-interleaved mapping type, a first target PDCCH on a resource corresponding to the first target CORESET.

In this embodiment of this application, in order to control all or most CCEs of the first target PDCCH transmitted on the resource corresponding to the first target CORESET to be within a receive bandwidth of UE, the CCE-REG-mapping type (CCE-REG-MappingType) of the first target CORESET can be set to support only the non-interleaved mapping type.

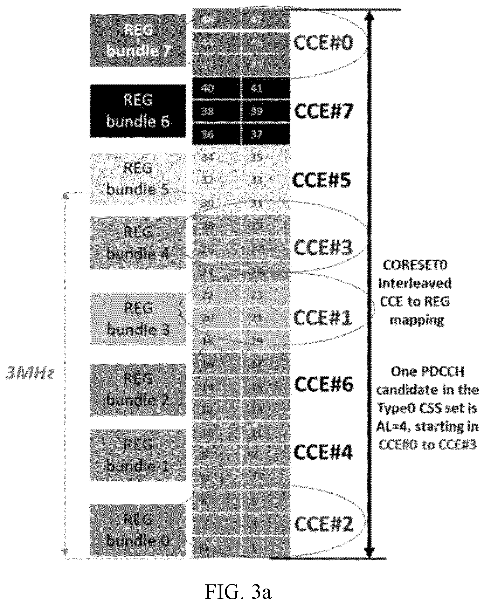

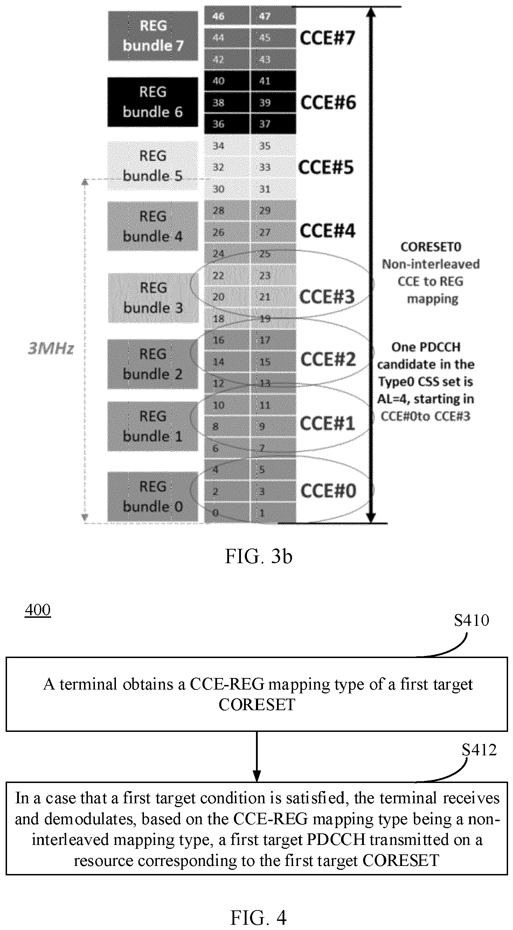

For example, as shown in FIG. 3(a), if CORESET#0 in 3 MHz uses interleaved CCE-to-REG mapping, CCE#0 may exceed the receive bandwidth of UE, and demodulation performance for PDCCH will be degraded due to lack of information carried on CCE#0. As shown in FIG. 3(b), using the non-interleaved CCE-to-REG mapping can better control all or most CCEs forming the PDCCH to be within the receive bandwidth of the UE, guaranteeing demodulation performance for the PDCCH.

In this embodiment of this application, optionally, the first target CORESET is associated with at least one of the following search space (Search Space, SS) sets:

(1) type-0 PDCCH common search space (Common Search Space, CSS), Type0-PDCCH CSS set;
(2) type-OA PDCCH CSS set, that is, Type0A-PDCCH CSS set;
(3) type-1 PDCCH CSS set, that is, Type1-PDCCH CSS set;
(4) type-2 PDCCH CSS set, that is, Type2-PDCCH CSS set;
(5) type-3 PDCCH CSS set, that is, Type3-PDCCH CSS set; and
(6) UE specific search space (UE specific Search Space, USS) set.

The CCE-REG-MappingType of the first target CORESET may be configured by the network-side device or specified by a protocol.

For example, the network-side device may configure or the protocol may specify that the CCE-REG mapping type of the first target CORESET is a non-interleaved mapping type in a case that a first target condition is met.

Optionally, the first target condition may include that a frequency domain resource occupied by the first target CORESET exceeds a target bandwidth, where the target bandwidth includes a bandwidth of a frequency domain unit currently deployed in a communication system and/or a maximum bandwidth supported by a terminal, and the frequency domain unit includes one of the following: cell, carrier, frequency band, and BWP.

For example, the CCE-REG-MappingType of the first target CORESET supporting only the non-interleaved mapping type is only applicable to a case that a bandwidth of a cell/carrier/frequency band/BWP currently deployed in NR or the maximum bandwidth supported by the terminal cannot carry all frequency domain resources of the first target CORESET.

In this embodiment of this application, the first target CORESET may be CORESET#0, for example, the first target CORESET may be associated with at least one of the foregoing search space sets (1) to (4). For example, the network-side device may configure or the protocol may specify that the CCE-REG-MappingType supporting only the non-interleaved mapping type is only applicable to CORESET#0 and a case that a bandwidth of a cell/carrier/frequency band/BWP currently deployed in NR or the maximum bandwidth supported by the terminal cannot carry all frequency domain resources of CORESET#0.

For example, using the *ControlResourceSetZero* IE, CORESET#0 may be configured as follows:

- the number of RBs of CORESET $N_{RB}^{CORESET}$ and the number of symbols of CORESET $N_{symb}^{CORESET}$ may be as defined in related technologies;
- in a case that $N_{RB}^{CORESET}$ is larger than the bandwidth supported by the cell or the UE, the UE may use non-interleaved mapping, and in other cases, the UE can use interleaved mapping;
- $L = 6$;
- $R = 2$;
- $n_{shift} = N_{ID}^{cell}$ ;
- in a case that CORESET#0 is configured by MIB or SIB 1, UE may use normal cyclic prefix; and
- the UE may use the same precoding in REG bundling.

Certainly, this is not limited to those described above, and the first target CORESET may alternatively be a CORESET other than CORESET#0, for example, a CORESET associated with the foregoing search space set (5) and/or (6).

In this embodiment of this application, optionally, a time domain resource occupied by the first target CORESET includes three orthogonal frequency division multiplexing (Orthogonal frequency division multiplex, OFDM) symbols, or the time domain resource occupied by the first target CORESET includes six OFDM symbols. In this optional implementation, the time domain resource occupied by the first target CORESET may be increased, so as to guarantee the capacity of the first target PDCCH transmitted on the resource of the first target CORESET.

In a possible implementation, the first target CORESET is located on an initial BWP of the terminal. That is, in this embodiment of this application, CCE-REG-MappingType supports only a non-interleaved mapping type on the initial BWP of the terminal. For example, during initial access of the terminal, the network-side device uses the non-interleaved CCE-to-REG mapping type for PDCCH transmission.

In this embodiment of this application, the network-side device configures the CCE-REG mapping type of the first target CORESET to be a non-interleaved mapping type; and transmits the first target PDCCH on the resource corresponding to the first target CORESET based on the non-interleaved mapping type, so that all or most CCEs forming the first target PDCCH can be controlled to be within a receive bandwidth of the terminal, thereby guaranteeing the demodulation performance for the first target PDCCH.

FIG. 4 is a schematic flowchart of a physical downlink control channel reception method according to an embodiment of this application. The method 400 may be executed by a terminal. In other words, the method may be performed by software or hardware installed on the terminal. As shown in FIG. 4, the method may include the following steps.

S410: The terminal obtains a CCE-REG mapping type of a first target CORESET, where the CCE-REG mapping type includes a non-interleaved mapping type.

S412: In a case that a first target condition is met, the terminal receives and demodulates, based on the CCE-REG mapping type being a non-interleaved mapping type, a first target PDCCH transmitted on a resource corresponding to the first target CORESET.

The PDCCH reception method in this embodiment of this application corresponds to the method 200, and the network-side device may transmit the first target PDCCH in the manner described in the method 200. For details, refer to the related description in the method 200.

The first target CORESET and the first target PDCCH in this embodiment of this application are the same as the first target CORESET and the first target PDCCH in the method 200. For details, refer to the description in the method 200.

In an optional implementation of this embodiment of this application, the first target condition may include that a frequency domain resource occupied by the first target CORESET exceeds a target bandwidth, where the target bandwidth includes a bandwidth of a frequency domain unit currently deployed in a communication system and/or a maximum bandwidth supported by a terminal, and the frequency domain unit includes one of the following: cell, carrier, frequency band, and BWP. The first target condition in this optional implementation is the same as the first target condition in method 200. For details, refer to the description in the method 200.

Optionally, the first target CORESET is located on the initial BWP of the terminal. That is, the terminal can receive and demodulate the first target PDCCH based on the non-interleaved mapping type during initial access in a case that the first target condition is met.

Optionally, the CCE-REG mapping type of the first target CORESET is configured by the network-side device or specified by the protocol.

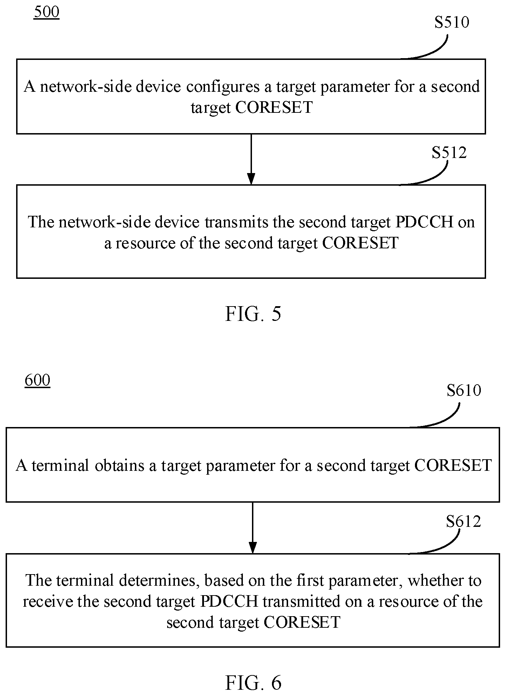

FIG. 5 is another schematic flowchart of a physical downlink control channel transmission method according to an embodiment of this application. The method 500 may be executed by a network-side device. In other words, the method may be performed by software or hardware installed on the network-side device. As shown in FIG. 5, the method may include the following steps.

S510: The network-side device configures a target parameter for a second target CORESET, where the target parameter includes a first parameter, and the first parameter is a reference parameter for determining by a terminal whether to receive a second target PDCCH.

S512: The network-side device transmits the second target PDCCH on a resource of the second target CORESET.

The network-side device may alternatively configure the target parameter for the second target CORESET, where the target parameter includes a reference parameter for determining by the terminal whether to receive the second target PDCCH, and the network-side device can control, based on the reference parameter, a parameter for transmitting the second target PDCCH on the resource of the second target CORESET, so as to control a receive terminal of the second target PDCCH to receive the second target PDCCH.

In a possible implementation, the first parameter includes a maximum coding rate, and the maximum coding rate indicates that the terminal gives up receiving or demodulating the second target PDCCH in a case that a target coding rate of the second target PDCCH is greater than or equal to the maximum coding rate, and receives and demodulates the second target PDCCH in a case that the target coding rate of the second target PDCCH is less than the maximum coding rate. That is, in this possible implementation, if an actual coding rate (that is, the target coding rate) for transmitting the second target PDCCH is less than the maximum coding rate, the terminal is indicated to receive and demodulate the second target PDCCH, and if the actual coding rate for transmitting the second target PDCCH is greater than or equal to the maximum coding rate, the terminal is indicated to give up receiving or demodulating the second target PDCCH. Based on the maximum coding rate, the network-side device can control the actual coding rate for transmitting the second target PDCCH, so as to control the terminal to receive the second target PDCCH.

For example, the first parameter may be the maximum coding rate (coding rate) for receiving the PDCCH, which is denoted as $C\_rmax$. When the actual coding rate of the PDCCH is greater than (or greater than or equal to) $C\_rmax$, the terminal gives up receiving or demodulating the PDCCH.

In a possible implementation, the first parameter includes a first number, and the first number indicates that the terminal receives and demodulates the second target PDCCH in a case that a second number is greater than or equal to the first number, or abandons receiving or abandons demodulating the second target PDCCH in a case that the second number is less than the first number; where the second number is the number of CCEs or REGs forming the second target PDCCH and located in a target bandwidth, and the target bandwidth includes a bandwidth of a frequency domain unit currently deployed in a communication system and/or a maximum bandwidth supported by the terminal, where the frequency domain unit includes one of the following: cell, carrier, frequency band, and BWP. That is, in this possible implementation, if the number (that is, the second number) of CCEs or REGs for actually transmitting the second target PDCCH and located in the target bandwidth is less than the first number, the terminal is indicated to give up receiving or demodulating the second target PDCCH. The network-side device can control the second number based on the first number, so as to control the terminal to receive the second target PDCCH.

For example, the first parameter may be the minimum number of CCEs/REGs for receiving the PDCCH, which is denoted as N_cce_min or N_reg_min, where different values or ratios may be configured for different aggregation levels (Aggregation level, AL); or one value or proportion may be configured for all aggregation levels, and when the number of CCEs/REGs forming the PDCCH and located within the bandwidth of the cell/carrier/bandBWP or the maximum bandwidth supported by the terminal is greater than (or greater than or equal to) N_cce_min or N_reg_min, the terminal receives and demodulates the PDCCH; otherwise, the terminal gives up receiving and demodulating the PDCCH.

In a possible implementation, the first parameter includes a first proportion, and the first proportion indicates that the terminal receives and demodulates the second target PDCCH in a case that a second proportion is greater than or equal to the first proportion, or abandons receiving or abandons demodulating the second target PDCCH in a case that the second proportion is less than the first proportion; where the second proportion is a ratio of the number of CCEs or REGs forming the second target PDCCH and located in a target bandwidth to the number of all CCEs or REGs forming the second target PDCCH, and the target bandwidth includes a bandwidth of a frequency domain unit currently deployed in a communication system and/or a maximum bandwidth supported by the terminal, where the frequency domain unit includes one of the following: cell, carrier, frequency band, and BWP.

For example, the first parameter may be a minimum proportion of CCEs/REGs for receiving the PDCCH, which is denoted as R_cce_min or R_reg_min, where different values or ratios may be configured for different aggregation levels (Aggregation level, AL); or one value or proportion may be configured for all aggregation levels, and when (the number of CCEs/REGs forming the PDCCH and located within the bandwidth of the cell/carrier/bandBWP or the maximum bandwidth supported by the terminal) divided by (the number of all CCEs/REGs forming the PDCCH) is greater than (or greater than or equal to) R_cce_min or R_reg_min, the terminal receives and demodulates the PDCCH; otherwise, the terminal gives up receiving and demodulating the PDCCH.

Optionally, the number of first parameters is the same as the number of aggregation levels supported by the second target PDCCH, each aggregation level corresponds to one of the first parameters, and different aggregation levels correspond to different first parameters.

For example, in Table 1, different N_cce_min are configured (or defined) for different aggregation levels ALs.

**Table 1**

| AL used for PDCCH | N_cce_min |
|---|---|
| AL=1 | 1 |
| AL=2 | 2 |
| AL=4 | 2 |
| AL=8 | 6 |
| AL=16 | 8 |

Alternatively, different aggregation levels supported by the second target PDCCH correspond to a same first parameter.

For example, a same proportion may be configured/defined for different aggregation levels AL, for example, R_cce_min=0.5, and the number of CCEs forming the PDCCH is shown in Table 2.

**Table 2**

| AL used for PDCCH | Number of CCEs for PDCCH that meets a reception and demodulation condition |
|---|---|
| AL=1 | 1 |
| AL=2 | 1 |
| AL=4 | 2 |

(continued)

| AL used for PDCCH | Number of CCEs for PDCCH that meets a reception and demodulation condition |
|---|---|
| AL=8 | 4 |
| AL=16 | 8 |

In this embodiment of this application, optionally, a time domain resource occupied by the second target CORESET includes x OFDM symbols, where x is an integer greater than 3 and less than or equal to 14, x is an integer multiple of y, and y is the number of OFDM symbols contained in one REG. Optionally, y=6; and x=6,12. In this optional implementation, the time domain resource occupied by the second target CORESET can be increased, and the capacity for the second target PDCCH can be guaranteed.

In the foregoing possible implementations, optionally, the target parameter may further include a second parameter, and the second parameter is used to inform the terminal of a manner of receiving the second target PDCCH in a case that a second target condition is met.

Optionally, the manner of receiving the second target PDCCH may include, but is not limited to, a rate matching manner or a puncturing manner. In a case that the terminal determines based on the first parameter to receive and demodulate the second target PDCCH, the second target PDCCH can be received in a manner indicated by the second parameter.

Optionally, the second target condition may include that a frequency domain resource for transmitting the second target PDCCH exceeds the target bandwidth, where the target bandwidth includes a bandwidth of a frequency domain unit currently deployed in a communication system and/or a maximum bandwidth supported by a terminal, and the frequency domain unit includes one of the following: cell, carrier, frequency band, and BWP. The second target condition is similar to the first target condition in the foregoing embodiment.

Optionally, the second target CORESET is located on the initial BWP of the terminal. That is, the network-side device transmits the second target PDCCH in the foregoing manner on the initial BWP of the terminal.

Optionally, the second target CORESET is associated with at least one of the following search space SS sets:

(1) type-0 PDCCH CSS set;
(2) type-OA PDCCH CSS set;
(3) type-1 PDCCH CSS set;
(4) type-2 PDCCH CSS set;
(5) type-3 PDCCH CSS set; and
(6) USS set.

In this embodiment of this application, the second target CORESET may be CORESET#0, for example, the second target CORESET may be associated with at least one of the foregoing search space sets (1) to (4). Certainly, this is not limited to those described above, and the second target CORESET may alternatively be a CORESET other than CORESET#0, for example, a CORESET associated with the foregoing search space set (5) and/or (6).

FIG. 6 is another schematic flowchart of a physical downlink control channel reception method according to an embodiment of this application. The method 600 may be executed by a terminal. In other words, the method may be performed by software or hardware installed on the terminal. As shown in FIG. 6, the method may include the following steps.

S610: The terminal obtains a target parameter for a second target CORESET, where the target parameter includes a first parameter, and the first parameter is a reference parameter for determining by the terminal whether to receive a second target PDCCH.

S612: The terminal determines, based on the first parameter, whether to receive the second target PDCCH transmitted on a resource of the second target CORESET.

The physical downlink control channel reception method in this embodiment and the foregoing method 500 correspond to the method executed by the terminal, and the related content corresponds to the method 500. For details, refer to the description in the method 500.

In a possible implementation, the first parameter includes: a maximum coding rate. The determining, by the terminal based on the first parameter, whether to receive the second target PDCCH transmitted on a resource of the second target CORESET includes: giving up, by the terminal, receiving or demodulating the second target PDCCH in a case that a target coding rate of the second target PDCCH is greater than or equal to the maximum coding rate; and receiving and demodulating, by the terminal, the second target PDCCH in a case that the target coding rate of the second target PDCCH is less than the maximum coding rate.

In a possible implementation, the first parameter includes a first number. The determining, by the terminal based on the first parameter, whether to receive the second target PDCCH transmitted on a resource of the second target CORESET includes: receiving and demodulating, by the terminal, the second target PDCCH in a case that a second number is greater than or equal to the first number, where the second number is the number of CCEs or REGs forming the second target PDCCH and located in a target bandwidth, and the target bandwidth includes a bandwidth of a frequency domain unit currently deployed in a communication system and/or a maximum bandwidth supported by the terminal, where the frequency domain unit includes one of the following: cell, carrier, frequency band, and BWP; and giving up, by the terminal, receiving and demodulating the second target PDCCH in a case that the second number is less than the first number.

In a possible implementation, the first parameter includes a first proportion The determining, by the terminal based on the first parameter, whether to receive the second target PDCCH transmitted on a resource of the second target CORESET includes: receiving and demodulating, by the terminal, the second target PDCCH in a case that a second proportion is greater than or equal to the first proportion, where the second proportion is a ratio of the number of CCEs or REGs forming the second target PDCCH and located in a target bandwidth to the number of all CCEs or REGs forming the second target PDCCH, and the target bandwidth includes a bandwidth of a frequency domain unit currently deployed in a communication system and/or a maximum bandwidth supported by the terminal, where the frequency domain unit includes one of the following: cell, carrier, frequency band, and BWP; and giving up, by the terminal, receiving and demodulating the second target PDCCH in a case that the second proportion is less than the first proportion.

In this embodiment of this application, the target parameter may be configured by the network-side device or specified by the protocol.

In a possible implementation of this embodiment of this application, the terminal does not expect to receive a PDCCH whose frequency domain resource exceeds a target bandwidth, where the target bandwidth includes a bandwidth of a frequency domain unit currently deployed in a communication system and/or a maximum bandwidth supported by the terminal, and the frequency domain unit includes one of the following: cell, carrier, frequency band, and BWP. The terminal does not expect to receive the PDCCH whose frequency domain resource exceeds the target bandwidth, which is a limitation to transmission of the network side. If the network side sends the PDCCH whose frequency domain resource exceeds the target bandwidth, the terminal considers it an error and gives up reception. That is, the terminal may ignore the target parameter sent by the network-side device, and if the network side sends the PDCCH whose frequency domain resource exceeds the target bandwidth, the terminal considers it an error and gives up reception.

In a possible implementation, the target parameter further includes a second parameter, and the second parameter is used to inform the terminal of a manner of receiving the second target PDCCH in a case that a second target condition is met.

Optionally, the second target condition may include that a frequency domain resource for transmitting the second target PDCCH exceeds the target bandwidth, where the target bandwidth includes a bandwidth of a frequency domain unit currently deployed in a communication system and/or a maximum bandwidth supported by a terminal, and the frequency domain unit includes one of the following: cell, carrier, frequency band, and BWP.

Optionally, the second target PDCCH includes a PDCCH transmitted on at least one the following:

type-0 PDCCH CSS set;
type-0APDCCH CSS set;
type-1 PDCCH CSS set;
type-2 PDCCH CSS set;
type-3 PDCCH CSS set; and
USS set.

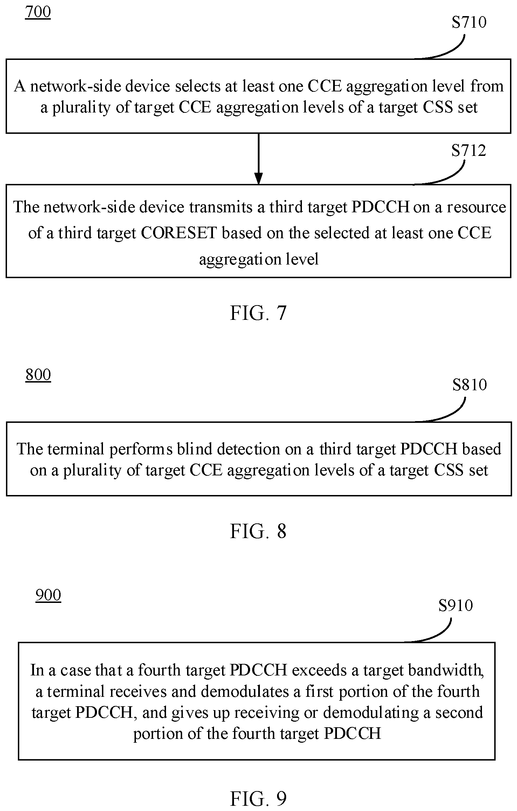

FIG. 7 is yet another schematic flowchart of a physical downlink control channel transmission method according to an embodiment of this application. The method 700 may be executed by a network-side device. In other words, the method may be performed by software or hardware installed on the network-side device. As shown in FIG. 7, the method may include the following steps.

S710: The network-side device selects at least one CCE aggregation level from a plurality of target CCE aggregation levels of a target CSS set, where the target CSS set is configured through searchSpaceSIB 1, and the plurality of target CCE aggregation levels include: level 1 and level 2.

S712: The network-side device transmits a third target PDCCH on a resource of a third target CORESET based on the selected at least one CCE aggregation level; where the third target CORESET is associated with the target CSS set.

In this embodiment of this application, the network-side device may extend CCE aggregation levels of the CSS set configured through search Space SIB 1, and when the CCE aggregation levels of level 1 and level 2 is used, this can reduce a frequency domain resource occupied by the third target PDCCH that is transmitted on the resource of the third target CORESET associated with the CSS set, so that all or most CCEs forming the third target PDCCH are within the receive bandwidth of the terminal.

In a possible implementation, the plurality of target CCE aggregation levels are specified by a protocol.

In another possible implementation, if the plurality of target CCE aggregation levels are configured by the network-side device, before the network-side device selects at least one CCE aggregation level from the plurality of target CCE aggregation levels of the target CSS set, the method further includes: configuring, by the network-side device, the target CSS set with the plurality of target CCE aggregation levels and the maximum number of PDCCH candidates corresponding to each target CCE aggregation level.

In a possible implementation, before the network-side device selects at least one CCE aggregation level from the plurality of target CCE aggregation levels of the target CSS set, the method further includes: indicating, by the network-side device, that the target CCE aggregation level is used in a case that a third target condition is met; or determining, by the network-side device according to agreement in a protocol, that the target CCE aggregation level is used in a case that a third target condition is met.

In a possible implementation, the third target condition may include that a frequency domain resource occupied by the third target CORESET exceeds a target bandwidth, where the target bandwidth includes a bandwidth of a frequency domain unit currently deployed in a communication system and/or a maximum bandwidth supported by a terminal, and the frequency domain unit includes one of the following: cell, carrier, frequency band, and BWP.

In this embodiment of this application, the CCE aggregation level of the existing target CSS set can be extended, and level 1, level 2, and the maximum number of PDCCH candidates corresponding to each of level 1 and level 2 can be added. As shown in Table 3, application scenarios of level 1 and level 2 are described in the table.

**Table 3**

| CCE aggregation level | Number of candidates |
|---|---|
| 1, Note 1 | 6 |
| 2, Note 1 | 3 |
| 4 | 4 |
| 8 | 2 |
| 16 | 1 |
| Note 1: Applicable only to a scenario where N is greater than a bandwidth supported by a cell or UE. | |

Alternatively, CCE aggregation levels of the target CSS set and the maximum number of PDCCH candidates corresponding to each CCE aggregation level can be added, and when the third target condition is met, one or more CCE aggregation levels can be selected from the added CCE aggregation levels and the maximum number of PDCCH candidates corresponding to each CCE aggregation level. The newly added CCE aggregation levels of the target CSS set and the maximum number of PDCCH candidates corresponding to each CCE aggregation level may be shown in Table 4.

**Table 4**

| CCE aggregation level | Number of candidates |
|---|---|
| 1 | 6 |
| 2 | 3 |
| 4 | 1 |

In this embodiment of this application, as shown in Table 5, the target CCE aggregation level may further include level 6.

**Table 5**

| CCE aggregation level | Number of candidates |
|---|---|
| 1 | 6 |
| 2 | 3 |

(continued)

| CCE aggregation level | Number of candidates |
|---|---|
| 4 | 1 |
| 6 | 1 |

In a possible implementation, the third target CORESET is located on an initial BWP of the terminal. For example, on the initial BWP of the terminal, the network-side device may select at least one of CCE aggregation levels 1, 2, and 6 to transmit the third target PDCCH.

In a possible implementation, the third target CORESET is associated with at least one of the following search space SS sets:

type-0 PDCCH CSS set;
type-0APDCCH CSS set;
type-1 PDCCH CSS set;
type-2 PDCCH CSS set;
type-3 PDCCH CSS set; and
USS set.

In this embodiment of this application, the third target CORESET may be CORESET#0, for example, the third target CORESET may be associated with at least one of the foregoing search space sets (1) to (4). Certainly, this is not limited to those described above, and the third target CORESET may alternatively be a CORESET other than CORESET#0, for example, a CORESET associated with the foregoing search space set (5) and/or (6).

FIG. 8 is yet another schematic flowchart of a physical downlink control channel reception method according to an embodiment of this application. The method 800 may be executed by a terminal. In other words, the method may be performed by software or hardware installed on the terminal. As shown in FIG. 8, the method may include the following step.

S810: The terminal performs blind detection on a third target PDCCH based on a plurality of target CCE aggregation levels of a target CSS set, where the third target PDCCH is transmitted on a resource of a third target CORESET, the target CSS set is configured through search Space SIB 1, the third target CORESET is associated with the target CSS set, and the plurality of target CCE aggregation levels include level 1 and level 2.

This embodiment of this application and the foregoing method 700 correspond to the method executed by the terminal, and the related content corresponds to the method 700. For details, refer to the description in the method 700. Details are not repeated here.

In a possible implementation, the performing, by the terminal, blind detection on a third target PDCCH based on a plurality of target CCE aggregation levels of a target CSS set includes:

performing, by the terminal, blind detection on the third target PDCCH based on the plurality of target CCE aggregation levels specified in a protocol; or
performing, by the terminal, blind detection on the third target PDCCH based on the plurality of target CCE aggregation levels configured by a network-side device.

In a possible implementation, the performing, by the terminal, blind detection on a third target PDCCH based on a plurality of target CCE aggregation levels of a target CSS set includes:
performing, by the terminal according to an indication of a network-side device or agreement of a protocol, blind detection on the third target PDCCH based on the plurality of target CCE aggregation levels of the target CSS set in a case that a third target condition is met.

In a possible implementation, the third target condition may include that a frequency domain resource occupied by the third target CORESET exceeds a target bandwidth, where the target bandwidth includes a bandwidth of a frequency domain unit currently deployed in a communication system and/or a maximum bandwidth supported by a terminal, and the frequency domain unit includes one of the following: cell, carrier, frequency band, and BWP.

In a possible implementation, the target CCE aggregation level further includes a level 6.

FIG. 9 is yet another schematic flowchart of a physical downlink control channel reception method according to an embodiment of this application. The method 900 may be executed by a terminal. In other words, the method may be performed by software or hardware installed on the terminal. As shown in FIG. 9, the method may include the following step.

S910: In a case that a fourth target PDCCH exceeds a target bandwidth, the terminal receives and demodulates a first portion of the fourth target PDCCH, and gives up receiving or demodulating a second portion of the fourth target PDCCH, where the first portion is a portion that is of the fourth target PDCCH and that is transmitted on the target bandwidth, and the second portion is a portion that is of the fourth target PDCCH and that is transmitted on a frequency domain resource beyond the target bandwidth; the target bandwidth includes a bandwidth of a frequency domain unit currently deployed in a communication system and/or the maximum bandwidth supported by the terminal, and the frequency domain unit includes one of the following: cell, carrier, frequency band, and BWP.

In this embodiment of this application, the terminal can unconditionally receive and demodulate a complete and partial PDCCH transmitted within the bandwidth range of the cell/carrier/frequency band/BWP or within the maximum bandwidth supported by the terminal.

In this embodiment of this application, the fourth target PDCCH may include a PDCCH transmitted on at least one of the following:

    type-0 PDCCH CSS set;
    type-0APDCCH CSS set;
    type-1 PDCCH CSS set;
    type-2 PDCCH CSS set;
    type-3 PDCCH CSS set; and
    USS set.

In this embodiment of this application, the fourth target CORESET may be CORESET#0, for example, the fourth target CORESET may be associated with at least one of the foregoing search space sets (1) to (4). Certainly, this is not limited to those described above, and the fourth target CORESET may alternatively be a CORESET other than CORESET#0, for example, a CORESET associated with the foregoing search space set (5) and/or (6).

It should be noted that all the foregoing methods 400, 600, 800, and 900 may be configured for the terminal, so as to execute different methods in different cases. For example, the method 900 is used for a PDCCH transmitted in the Type0/0A/1/2-PDCCH CSS set; and the methods 400, 600, and 800 are used for a PDCCH transmitted in the Type3 CSS set or USS.

It should be noted that, for the physical downlink control channel transmission method provided in the embodiments of this application, the execution body may be an physical downlink control channel transmission apparatus, or a control module for executing the physical downlink control channel transmission method in the physical downlink control channel transmission apparatus. In this embodiment of this application, the physical downlink control channel transmission apparatus provided in the embodiments of this application is described by using an example in which the physical downlink control channel transmission method is executed by the physical downlink control channel transmission apparatus.

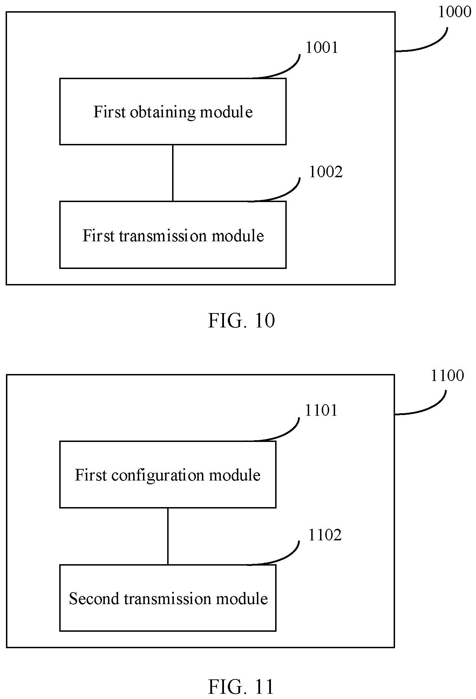

FIG. 10 is a schematic structural flowchart of a physical downlink control channel transmission apparatus according to an embodiment of this application. As shown in FIG. 10, the apparatus 1000 mainly includes: a first obtaining module 1001 and a first transmission module 1002. The first obtaining module 1001 is configured to obtain a CCE-REG mapping type of a first target CORESET, where the CCE-REG mapping type includes a non-interleaved mapping type. The first transmission module 1002 is configured to transmit, based on the CCE-REG mapping type being a non-interleaved mapping type, a first target physical downlink control channel PDCCH on a resource corresponding to the first target CORESET.

In a possible implementation, the first target CORESET is associated with at least one of the following search space SS sets:

    type-0 PDCCH common search space CSS set;
    type-0APDCCH CSS set;
    type-1 PDCCH CSS set;
    type-2 PDCCH CSS set;
    type-3 PDCCH CSS set; and
    UE specific search space USS set.

In a possible implementation, the network-side device configures or the protocol specifies that: the CCE-REG mapping type of the first target CORESET is a non-interleaved mapping type in a case that a first target condition is met.

In a possible implementation, the first target condition includes:
that a frequency domain resource occupied by the first target CORESET exceeds a target bandwidth, where the target bandwidth includes a bandwidth of a frequency domain unit currently deployed in a communication system and/or a maximum bandwidth supported by a terminal, and the frequency domain unit includes one of the following: cell, carrier, frequency band, and bandwidth part BWP.

In a possible implementation, a time domain resource occupied by the first target CORESET includes three orthogonal frequency division multiplexing OFDM symbols, or the time domain resource occupied by the first target CORESET includes six OFDM symbols.

In a possible implementation, the first target CORESET is located on an initial BWP of the terminal.

FIG. 11 is another schematic structural flowchart of a physical downlink control channel transmission apparatus according to an embodiment of this application. As shown in FIG. 11, the apparatus 1100 mainly includes: a first configuration module 1101 and a second transmission module 1102. The first configuration module 1101 is configured to configure a target parameter for a second target CORESET, where the target parameter includes a first parameter, and the first parameter is a reference parameter for determining by a terminal whether to receive a second target PDCCH. The second transmission module 1102 is configured to transmit the second target PDCCH on a resource of the second target CORESET.

In a possible implementation, the first parameter includes a maximum coding rate, and the maximum coding rate indicates that the terminal gives up receiving or demodulating the second target PDCCH in a case that a target coding rate of the second target PDCCH is greater than or equal to the maximum coding rate, and receives and demodulates the second target PDCCH in a case that the target coding rate of the second target PDCCH is less than the maximum coding rate.

In a possible implementation, the first parameter includes a first number, and the first number indicates that the terminal receives and demodulates the second target PDCCH in a case that a second number is greater than or equal to the first number, or abandons receiving or abandons demodulating the second target PDCCH in a case that the second number is less than the first number; where the second number is the number of CCEs or REGs forming the second target PDCCH and located in a target bandwidth, and the target bandwidth includes a bandwidth of a frequency domain unit currently deployed in a communication system and/or a maximum bandwidth supported by the terminal, where the frequency domain unit includes one of the following: cell, carrier, frequency band, and BWP.

In a possible implementation, the first parameter includes a first proportion, and the first proportion indicates that the terminal receives and demodulates the second target PDCCH in a case that a second proportion is greater than or equal to the first proportion, or abandons receiving or abandons demodulating the second target PDCCH in a case that the second proportion is less than the first proportion; where the second proportion is a ratio of the number of CCEs or REGs forming the second target PDCCH and located in a target bandwidth to the number of all CCEs or REGs forming the second target PDCCH, and the target bandwidth includes a bandwidth of a frequency domain unit currently deployed in a communication system and/or a maximum bandwidth supported by the terminal, where the frequency domain unit includes one of the following: cell, carrier, frequency band, and BWP.

In a possible implementation, the number of first parameters is the same as the number of aggregation levels supported by the second target PDCCH, each aggregation level corresponds to one of the first parameters, and different aggregation levels correspond to different first parameters.

In a possible implementation, different aggregation levels supported by the second target PDCCH correspond to a same first parameter.

In a possible implementation, a time domain resource occupied by the second target CORESET includes x OFDM symbols, where x is an integer greater than 3 and less than or equal to 14, x is an integer multiple of y, and y is the number of OFDM symbols contained in one REG.

In a possible implementation, the target parameter further includes a second parameter, and the second parameter is used to inform the terminal of a manner of receiving the second target PDCCH in a case that a second target condition is met.

In a possible implementation, the second target condition includes:

that a frequency domain resource for transmitting the second target PDCCH exceeds the target bandwidth, where the target bandwidth includes a bandwidth of a frequency domain unit currently deployed in a communication system and/or a maximum bandwidth supported by the terminal, and the frequency domain unit includes one of the following: cell, carrier, frequency band, and BWP.

In a possible implementation, the manner of receiving the second target PDCCH includes a rate matching manner or a puncturing manner.

In a possible implementation, the second target CORESET is located on an initial BWP of the terminal.

In a possible implementation, the second target CORESET is associated with at least one of the following search space SS sets:

type-0 PDCCH CSS set;
type-0APDCCH CSS set;
type-1 PDCCH CSS set;
type-2 PDCCH CSS set;

type-3 PDCCH CSS set; and
USS set.

In a possible implementation, the second target CORESET includes CORESET#0.

In a possible implementation, the second target CORESET includes a CORESET other than CORESET#0..

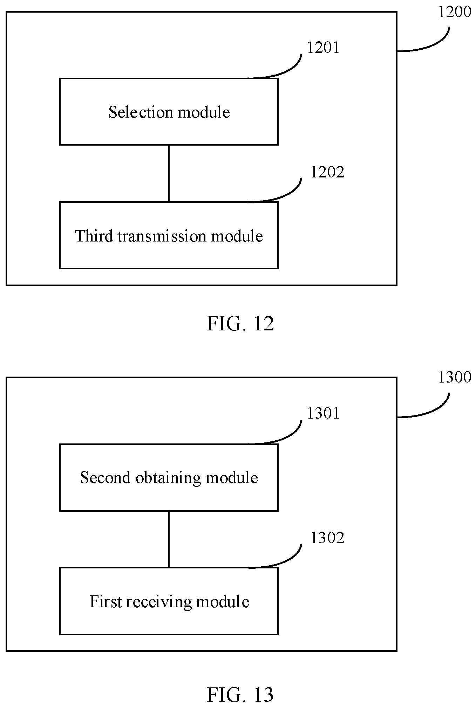

FIG. 12 is yet another schematic structural flowchart of a physical downlink control channel transmission apparatus according to an embodiment of this application. As shown in FIG. 12, the apparatus 1200 mainly includes: a selection module 1201 and a third transmission module 1202. The selection module 1201 is configured to select at least one CCE aggregation level from a plurality of target CCE aggregation levels of a target CSS set, where the target CSS set is configured through searchSpaceSIB 1, and the plurality of target CCE aggregation levels include: level 1 and level 2; and the third transmission module 1202 is configured to transmit a third target PDCCH on a resource of a third target CORESET based on the selected at least one CCE aggregation level; where the third target CORESET is associated with the target CSS set.

In a possible implementation, the plurality of target CCE aggregation levels are specified by a protocol.

In a possible implementation, the apparatus further includes:
a configuration module, configured to configure the target CSS set with the plurality of target CCE aggregation levels and the maximum number of PDCCH candidates corresponding to each target CCE aggregation level.

In a possible implementation, the selection module 1201 is further configured to:

indicate that the target CCE aggregation level is used in a case that a third target condition is met; or
determine, according to agreement in a protocol, that the target CCE aggregation level is used in a case that a third target condition is met.

In a possible implementation, the third target condition includes:
that a frequency domain resource occupied by the third target CORESET exceeds a target bandwidth, where the target bandwidth includes a bandwidth of a frequency domain unit currently deployed in a communication system and/or a maximum bandwidth supported by a terminal, and the frequency domain unit includes one of the following: cell, carrier, frequency band, and bandwidth part BWP.

In a possible implementation, the target CCE aggregation level further includes a level 6.

In a possible implementation, the third target CORESET is located on an initial BWP of the terminal.

In a possible implementation, the third target CORESET is associated with at least one of the following search space SS sets:

type-0 PDCCH CSS set;
type-0APDCCH CSS set;
type-1 PDCCH CSS set;
type-2 PDCCH CSS set;
type-3 PDCCH CSS set; and
USS set.

In a possible implementation, the third target CORESET includes CORESET#0.

In a possible implementation, the third target CORESET includes a CORESET other than CORESET#0.

The physical downlink control channel transmission apparatus in this embodiment of this application may be an apparatus, or may be a component, an integrated circuit, or a chip in a network-side device. For example, the network-side device may include, but is not limited to, the types of the network-side device 12 listed above, which is not specifically limited in this embodiment of this application.

The physical downlink control channel transmission apparatus in this embodiment of this application may be an apparatus with an operating system. The operating system may be an Android (Android) operating system, an iOS operating system, or other possible operating systems, and is not specifically limited in the embodiments of this application.

The physical downlink control channel transmission apparatus provided in this embodiment of this application is capable of implementing the processes implemented by the network-side device in the method embodiments in FIG. 2 to FIG. 9, with the same technical effects achieved. To avoid repetition, details are not described herein again.

FIG. 13 is a schematic structural diagram of a physical downlink control channel reception apparatus according to an embodiment of this application. As shown in FIG. 13, the apparatus 1300 mainly includes: a second obtaining module 1301 and a first receiving module 1302. The second obtaining module 1301 is configured to obtain a CCE-REG mapping type of a first target CORESET, where the CCE-REG mapping type includes: a non-interleaved mapping type; and the first receiving module 1302 is configured to: in a case that a first target condition is met, receive and demodulate, based on the CCE-REG mapping type being a non-interleaved mapping type, a first target PDCCH transmitted on a resource corresponding to the first target CORESET.

In a possible implementation, the first target condition includes:

that a frequency domain resource occupied by the first target CORESET exceeds a target bandwidth, where the target bandwidth includes a bandwidth of a frequency domain unit currently deployed in a communication system and/or a maximum bandwidth supported by a terminal, and the frequency domain unit includes one of the following: cell, carrier, frequency band, and bandwidth part BWP.

In a possible implementation, the first target CORESET is located on an initial BWP of the terminal.

In a possible implementation, the CCE-REG mapping type of the first target CORESET is configured by a network-side device or specified by a protocol.

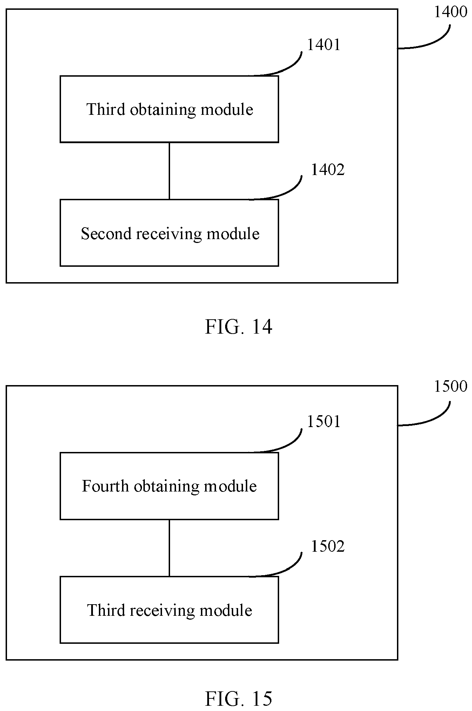

FIG. 14 is another schematic structural flowchart of a physical downlink control channel reception apparatus according to an embodiment of this application. As shown in FIG. 14, the apparatus 1400 mainly includes: a third obtaining module 1401 and a second receiving module 1402. The third obtaining module 1401 is configured to obtain a target parameter for a second target CORESET, where the target parameter includes a first parameter, and the first parameter is a reference parameter for determining by a terminal whether to receive a second target PDCCH; and the second receiving module 1402 is configured to determine, based on the first parameter, whether to receive the second target PDCCH transmitted on a resource of the second target CORESET.

In a possible implementation, the first parameter includes a maximum coding rate.

That the second receiving module 1402 determines, based on the first parameter, whether to receive the second target PDCCH transmitted on a resource of the second target CORESET includes:

giving up receiving or demodulating the second target PDCCH in a case that a target coding rate of the second target PDCCH is greater than or equal to the maximum coding rate; and

receiving and demodulating the second target PDCCH in a case that the target coding rate of the second target PDCCH is less than the maximum coding rate.

In a possible implementation, the first parameter includes a first number.

That the second receiving module 1402 determines, based on the first parameter, whether to receive the second target PDCCH transmitted on a resource of the second target CORESET includes:

receiving and demodulating the second target PDCCH in a case that a second number is greater than or equal to the first number, where the second number is the number of CCEs or REGs forming the second target PDCCH and located in a target bandwidth, and the target bandwidth includes a bandwidth of a frequency domain unit currently deployed in a communication system and/or a maximum bandwidth supported by the terminal, where the frequency domain unit includes one of the following: cell, carrier, frequency band, and BWP; and

giving up receiving and demodulating the second target PDCCH in a case that the second number is less than the first number.

In a possible implementation, the first parameter includes a first proportion.

That the second receiving module 1402 determines, based on the first parameter, whether to receive the second target PDCCH transmitted on a resource of the second target CORESET includes:

receiving and demodulating the second target PDCCH in a case that a second proportion is greater than or equal to the first proportion, where the second proportion is a ratio of the number of CCEs or REGs forming the second target PDCCH and located in a target bandwidth to the number of all CCEs or REGs forming the second target PDCCH, and the target bandwidth includes a bandwidth of a frequency domain unit currently deployed in a communication system and/or a maximum bandwidth supported by the terminal, where the frequency domain unit includes one of the following: cell, carrier, frequency band, and BWP; and

giving up receiving and demodulating the second target PDCCH in a case that the second proportion is less than the first proportion.

In a possible implementation, the target parameter is configured by a network-side device or specified by a protocol.

In a possible implementation, the apparatus does not expect to receive a PDCCH whose frequency domain resource exceeds a target bandwidth, where the target bandwidth includes a bandwidth of a frequency domain unit currently deployed in a communication system and/or a maximum bandwidth supported by the terminal, and the frequency domain unit includes one of the following: cell, carrier, frequency band, and BWP.

In a possible implementation, the target parameter further includes a second parameter, and the second parameter is used to inform the terminal of a manner of receiving the second target PDCCH in a case that a second target condition is met.

In a possible implementation, the second target condition includes:

that a frequency domain resource for transmitting the second target PDCCH exceeds the target bandwidth, where the target bandwidth includes a bandwidth of a frequency domain unit currently deployed in a communication system and/or a maximum bandwidth supported by the terminal, and the frequency domain unit includes one of the following: cell, carrier, frequency band, and BWP.

In a possible implementation, the second target PDCCH includes a PDCCH transmitted on at least one the following:

    type-0 PDCCH CSS set;
    type-0APDCCH CSS set;
    type-1 PDCCH CSS set;
    type-2 PDCCH CSS set;
    type-3 PDCCH CSS set; and
    USS set.

FIG. 15 is yet another schematic structural flowchart of a physical downlink control channel reception apparatus according to an embodiment of this application. As shown in FIG. 15, the apparatus 1500 mainly includes: a fourth obtaining module 1501 and a third receiving module 1502. The fourth obtaining module 1501 is configured to obtain a plurality of target CCE aggregation levels of a target CSS set, where the target CSS set is configured through searchSpaceSIB1, and the plurality of target CCE aggregation levels include level 1 and level 2; and the third receiving module 1502 is configured to perform blind detection on a third target PDCCH based on the plurality of target CCE aggregation levels, where the third target PDCCH is transmitted on a resource of a third target CORESET, and the third target CORESET is associated with the target CSS set.

In a possible implementation, that the third receiving module 1502 performs blind detection on the third target PDCCH based on the plurality of target CCE aggregation levels of the target CSS set includes:

    performing blind detection on the third target PDCCH based on the plurality of target CCE aggregation levels specified in a protocol; or,
    performing blind detection on the third target PDCCH based on the plurality of target CCE aggregation levels configured by a network-side device.

In a possible implementation, that the third receiving module 1502 performs blind detection on the third target PDCCH based on the plurality of target CCE aggregation levels of the target CSS set includes:

performing, according to an indication of a network-side device or agreement of a protocol, blind detection on the third target PDCCH based on the plurality of target CCE aggregation levels of the target CSS set in a case that a third target condition is met.

In a possible implementation, the third target condition includes:

that a frequency domain resource occupied by the third target CORESET exceeds a target bandwidth, where the target bandwidth includes a bandwidth of a frequency domain unit currently deployed in a communication system and/or a maximum bandwidth supported by a terminal, and the frequency domain unit includes one of the following: cell, carrier, frequency band, and bandwidth part BWP.

In a possible implementation, the target CCE aggregation level further includes a level 6.

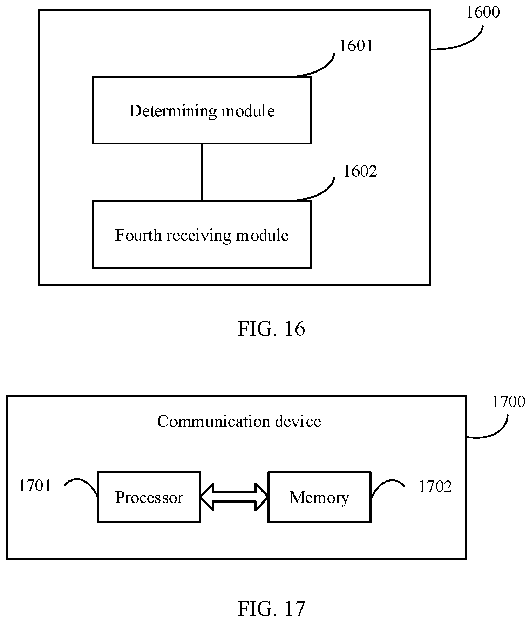

FIG. 16 is yet another schematic structural flowchart of a physical downlink control channel reception apparatus according to an embodiment of this application. As shown in FIG. 16, the apparatus 1600 mainly includes: a determining module 1601 and a fourth receiving module 1602. The determining module 1601 is configured to determine that a fourth target PDCCH exceed a target bandwidth, where the target bandwidth includes a bandwidth of a frequency domain unit currently deployed in a communication system and/or a maximum bandwidth supported by a terminal, and the frequency domain unit includes one of the following: cell, carrier, frequency band, and bandwidth part BWP. The fourth receiving module 1602 is configured to: in a case that the fourth target PDCCH exceeds the target bandwidth, receive and demodulate a first portion of the fourth target PDCCH, and give up receiving or demodulating a second portion of the fourth target PDCCH, where the first portion is a portion that is of the fourth target PDCCH and that is transmitted on the target bandwidth, and the second portion is a portion that is of the fourth target PDCCH and that is transmitted on a frequency domain resource beyond the target bandwidth.

In a possible implementation, the fourth target PDCCH includes a PDCCH transmitted on at least one the following:

type-0 PDCCH CSS set;
type-0APDCCH CSS set;
type-1 PDCCH CSS set;
type-2 PDCCH CSS set;
type-3 PDCCH CSS set; and
USS set.

Optionally, as shown in FIG. 17, an embodiment of this application further provides a communication device 1700, including a processor 1701, a memory 1702, and a program or instructions stored in the memory 1702 and executable on the processor 1701. For example, when the communications device 1700 is a terminal and when the program or the instructions are executed by the processor 1701, the processes of the foregoing embodiment of the physical downlink control channel reception method are implemented, with the same technical effects achieved. When the communication device 1700 is a network-side device and when the program or the instructions are executed by the processor 1701, the processes of the foregoing embodiment of the physical downlink control channel transmission method are implemented, with the same technical effects achieved. To avoid repetition, details are not described herein again.

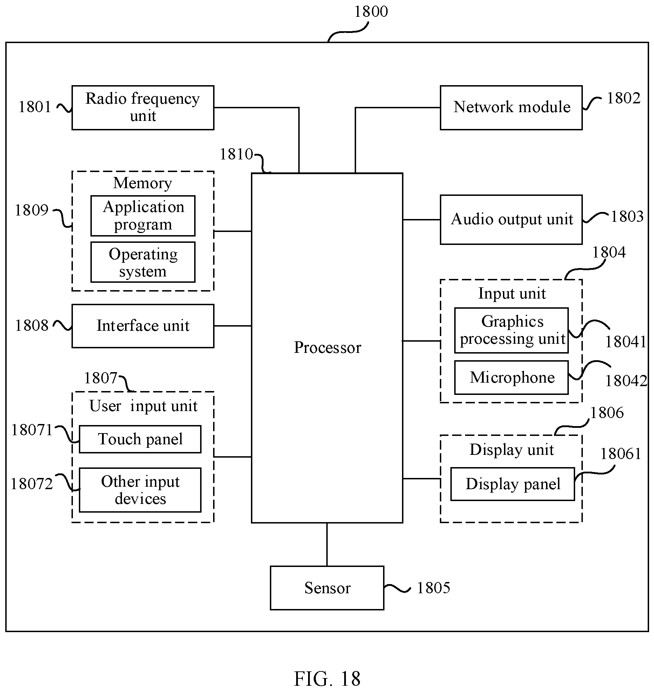

An embodiment of this application further provides a terminal, including a processor and a communication interface, the processor is configured to implement the processes of the foregoing embodiments of the physical downlink control channel reception method, and the communication interface is configured to communicate with the network-side device. The terminal embodiments correspond to the foregoing terminal-side method embodiments, and the implementation processes and implementations of the foregoing method embodiments can be applied to the terminal embodiments, with the same technical effects achieved. Specifically, FIG. 18 is a schematic diagram of a hardware structure of a terminal for implementing the embodiments of this application.

The terminal 1800 includes but is not limited to components such as a radio frequency unit 1801, a network module 1802, an audio output unit 1803, an input unit 1804, a sensor 1805, a display unit 1806, a user input unit 1807, an interface unit 1808, a memory 1809, and a processor 1810.

Persons skilled in the art can understand that the terminal 1800 may further include a power supply (for example, a battery) supplying power to the components, and the power supply may be logically connected to the processor 1810 through a power management system. In this way, functions such as charge management, discharge management, and power consumption management are implemented by using the power management system. The structure of the terminal shown in FIG. 18 does not constitute any limitation on the terminal. The terminal may include more or fewer components than shown in the figure, or a combination of some components, or the components disposed differently. Details are not described herein again.

It can be understood that in this embodiment of this application, the input unit 1804 may include a graphics processing unit (Graphics Processing Unit, GPU) 18041 and a microphone 18042. The graphics processing unit 18041 processes image data of a still picture or video obtained by an image capture apparatus (such as a camera) in a video capture mode or an image capture mode. The display unit 1806 may include a display panel 18061, and the display panel 18061 may be configured in a form of a liquid crystal display, an organic light-emitting diode, and the like. The user input unit 1807 may include a touch panel 18071 and other input devices 18072. The touch panel 18071 is also referred to as a touchscreen. The touch panel 18071 may include two parts: a touch detection apparatus and a touch controller. The other input devices 18072 may include but are not limited to a physical keyboard, a function key (such as a volume control key or a power on/off key), a trackball, a mouse, a joystick, and the like. Details are not described herein.

In this embodiment of this application, the radio frequency unit 1801 receives downlink data from a network-side device, and then sends the downlink data to the processor 1810 for processing; and also sends uplink data to the network-side device. Generally, the radio frequency unit 1801 includes but is not limited to an antenna, at least one amplifier, a transceiver, a coupler, a low noise amplifier, a duplexer, and the like.

The memory 1809 may be configured to store software programs or instructions and various data. The memory 1809 may include a program or instruction storage area and a data storage area. The program or instruction storage area may store an operating system, an application program or instruction required by at least one function (for example, a sound playback function or an image playback function), and the like. In addition, the memory 1809 may include a high-speed random access memory, and may further include a non-volatile memory. The non-volatile memory may be a read-only memory (Read-Only memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, a flash memory device, or another non-transitory solid-state storage device.

The processor 1810 may include one or more processing units. Optionally, an application processor and a modem processor may be integrated in the processor 1810. This application processor primarily processes an operating system, user interfaces, application programs or instructions, and the like. The modem processor primarily processes radio communication, for example, being a baseband processor. It can be understood that the modem processor may alternatively be not integrated in the processor 1810.

The processor 1810 is configured to:

obtain a CCE-REG mapping type of a first target CORESET, wherein the CCE-REG mapping type includes: a non-interleaved mapping type; and in a case that a first target condition is met, receive and demodulate, based on the CCE-REG mapping type being a non-interleaved mapping type, a first target PDCCH transmitted on a resource corresponding to the first target CORESET; or

obtain a target parameter for a second target CORESET, wherein the target parameter includes a first parameter, and the first parameter is a reference parameter for determining by a terminal whether to receive a second target PDCCH; and determine, based on the first parameter, whether to receive the second target PDCCH transmitted on a resource of the second target CORESET; or

obtain a plurality of target CCE aggregation levels of a target CSS set, wherein the target CSS set is configured through search Space SIB 1, and the plurality of target CCE aggregation levels include level 1 and level 2; and perform blind detection on a third target PDCCH based on the plurality of target CCE aggregation levels, wherein the third target PDCCH is transmitted on a resource of a third target CORESET, and the third target CORESET is associated with the target CSS set; or

in a case that a fourth target PDCCH exceeds a target bandwidth, receive and demodulate a first portion of the fourth target PDCCH, and gives up receiving or demodulating a second portion of the fourth target PDCCH, wherein the first portion is a portion that is of the fourth target PDCCH and that is transmitted on the target bandwidth, and the second portion is a portion that is of the fourth target PDCCH and that is transmitted on a frequency domain resource beyond the target bandwidth; the target bandwidth includes a bandwidth of a frequency domain unit currently deployed in a communication system and/or the maximum bandwidth supported by the terminal, and the frequency domain unit includes one of the following: cell, carrier, frequency band, and bandwidth part BWP.

An embodiment of this application further provides a network-side device, including a processor and a communication interface, the processor is configured to implement the processes of the foregoing embodiments of the physical downlink control channel transmission method, and the communication interface is configured to communicate with the terminal. The network-side device embodiments correspond to the foregoing network-side device method embodiments, and the implementation processes and implementations of the foregoing method embodiments can be applied to the network-side device embodiments, with the same technical effects achieved.

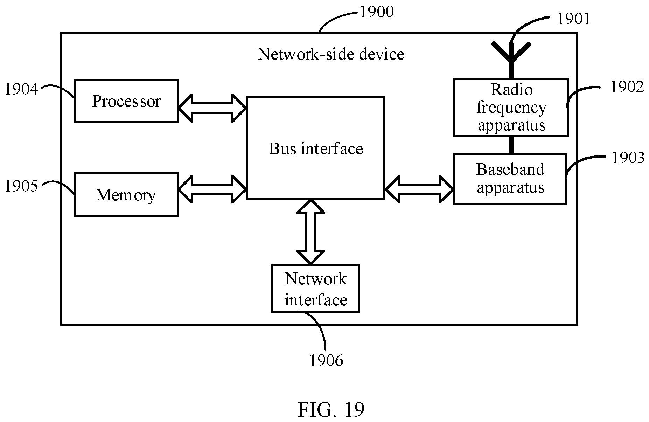

Specifically, an embodiment of this application further provides a network-side device. As shown in FIG. 19, the network device 1900 includes an antenna 1901, a radio frequency apparatus 1902, and a baseband apparatus 1903. The antenna 1901 is connected to the radio frequency apparatus 1902. In an uplink direction, the radio frequency apparatus 1902 receives information by using the antenna 1901, and sends the received information to the baseband apparatus 1903 for processing. In a downlink direction, the baseband apparatus 1903 processes to-be-sent information, and sends the information to the radio frequency apparatus 1902; and the radio frequency apparatus 1902 processes the received information and then sends the information out by using the antenna 1901.

The frequency band processing apparatus may be located in the baseband apparatus 1903. The method performed by the network-side device in the foregoing embodiments may be implemented in the baseband apparatus 1903, and the baseband apparatus 1903 includes a processor 1904 and a memory 1905.

The baseband apparatus 1903 may include, for example, at least one baseband board, where a plurality of chips are disposed on the baseband board. As shown in FIG. 19, one of the chips, for example, the processor 1904, is connected to the memory 1905, to invoke a program in the memory 1905 to perform the operation of the network device shown in the foregoing method embodiments.

The baseband apparatus 1903 may further include a network interface 1906, configured to exchange information with the radio frequency apparatus 1902, where the interface is, for example, a common public radio interface (common public radio interface, CPRI for short).

Specifically, the network-side device in this embodiment of the present invention further includes: an instruction or a program stored in the memory 1905 and executable on the processor 1904. The processor 1904 invokes the instruction or program in the memory 1905 to execute the method executed by the modules shown in FIG. 10 to FIG. 12, with the same technical effects achieved. To avoid repetition, details are not repeated herein.

An embodiment of this application further provides a readable storage medium, where a program or instructions are stored in the readable storage medium. When the program or the instructions are executed by a processor, the processes of the foregoing embodiments of the physical downlink control channel transmission method can be implemented, or the processes of the foregoing embodiments of the physical downlink control channel reception method can be implemented, with the same technical effects achieved. To avoid repetition, details are not described herein again.

The processor is a processor in the terminal described in the foregoing embodiments. The readable storage medium includes a computer-readable storage medium, for example, a computer read-only memory (Read-Only Memory, ROM), a random access memory (Random Access Memory, RAM), a magnetic disk, or an optical disc.

An embodiment of this application further provides a chip, where the chip includes a processor and a communications interface. The communications interface is coupled to the processor, and the processor is configured to run a program or instructions to implement the processes of the foregoing embodiments of the physical downlink control channel transmission method or the processes of the foregoing embodiments of the physical downlink control channel reception method, with the same technical effects achieved. To avoid repetition, details are not described herein again.

It should be understood that the chip mentioned in the embodiments of this application may also be referred to as a system-level chip, a system chip, a chip system, a system-on-chip, or the like.

An embodiment of this application further provides a computer program/program product, where the computer program/program product is stored in a non-transitory storage medium, and when being executed by at least one processor, the program/program product is configured to implement the processes of the foregoing embodiments of the physical downlink control channel transmission method or the processes of the foregoing embodiments of the physical downlink control channel reception method, with the same technical effects achieved. To avoid repetition, details are not repeated herein.

An embodiment of this application further provides an electronic device, where the electronic device is configured to implement the processes of the foregoing embodiments of the physical downlink control channel transmission method or the processes of the foregoing embodiments of the physical downlink control channel reception method, with the same technical effects achieved. To avoid repetition, details are not repeated herein.

It should be noted that in this specification, the term "include", "comprise", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described method may be performed in an order different from the order described, and steps may be added, omitted, or combined. In addition, features described with reference to some examples may be combined in other examples.

According to the description of the foregoing implementations, persons skilled in the art can clearly understand that the method in the foregoing embodiments may be implemented by software in combination with a necessary general hardware platform. Certainly, the method in the foregoing embodiments may alternatively be implemented by hardware. However, in many cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, a network device, or the like) to perform the methods described in the embodiments of this application.

The foregoing describes the embodiments of this application with reference to the accompanying drawings. However, this application is not limited to the foregoing specific implementations. These specific implementations are merely illustrative rather than restrictive. Inspired by this application, persons of ordinary skill in the art may develop many other forms without departing from the essence of this application and the protection scope of the claims, and all such forms shall fall within the protection scope of this application.

**Claims**

1. A physical downlink control channel transmission method, comprising:

   obtaining, by a network-side device, a control channel element CCE-resource element group REG mapping type of a first target control resource set CORESET, wherein the CCE-REG mapping type is a non-interleaved mapping type; and
   transmitting, by the network-side device based on the CCE-REG mapping type being a non-interleaved mapping type, a first target physical downlink control channel PDCCH on a resource corresponding to the first target CORESET.

2. The method according to claim 1, wherein the first target CORESET is associated with at least one of the following search space SS sets:

> type-0 PDCCH common search space CSS set;
> type-OA PDCCH CSS set;
> type-1 PDCCH CSS set;
> type-2 PDCCH CSS set;
> type-3 PDCCH CSS set; and
> UE specific search space USS set.

3. The method according to claim 1, wherein in a case that a first target condition is met, the CCE-REG mapping type of the first target CORESET is a non-interleaved mapping type.

4. The method according to claim 3, wherein the first target condition comprises:
that a frequency domain resource occupied by the first target CORESET exceeds a target bandwidth, wherein the target bandwidth comprises a bandwidth of a frequency domain unit currently deployed in a communication system and/or a maximum bandwidth supported by a terminal, and the frequency domain unit comprises one of the following: cell, carrier, frequency band, and bandwidth part BWP.

5. The method according to any one of claims 1 to 4, wherein a time domain resource occupied by the first target CORESET comprises three orthogonal frequency division multiplexing OFDM symbols, or the time domain resource occupied by the first target CORESET comprises six OFDM symbols.

6. The method according to any one of claims 1 to 4, wherein the first target CORESET is located on an initial BWP of a terminal.

7. A physical downlink control channel transmission method, comprising:

> configuring, by a network-side device, a target parameter for a second target CORESET, wherein the target parameter comprises a first parameter, and the first parameter is a reference parameter for determining by a terminal whether to receive a second target PDCCH; and
> transmitting, by the network-side device, the second target PDCCH on a resource of the second target CORESET.

8. The method according to claim 7, wherein the first parameter comprises a maximum coding rate, and the maximum coding rate indicates that the terminal gives up receiving or demodulating the second target PDCCH in a case that a target coding rate of the second target PDCCH is greater than or equal to the maximum coding rate, and receives and demodulates the second target PDCCH in a case that the target coding rate of the second target PDCCH is less than the maximum coding rate.

9. The method according to claim 7, wherein the first parameter comprises a first number, and the first number indicates that the terminal receives and demodulates the second target PDCCH in a case that a second number is greater than or equal to the first number, or gives up receiving or gives up demodulating the second target PDCCH in a case that the second number is less than the first number; wherein the second number is a number of CCEs or REGs forming the second target PDCCH and located in a target bandwidth, and the target bandwidth comprises a bandwidth of a frequency domain unit currently deployed in a communication system and/or a maximum bandwidth supported by the terminal, wherein the frequency domain unit comprises one of the following: cell, carrier, frequency band, and BWP.

10. The method according to claim 7, wherein the first parameter comprises a first proportion, and the first proportion indicates that the terminal receives and demodulates the second target PDCCH in a case that a second proportion is greater than or equal to the first proportion, or gives up receiving or gives up demodulating the second target PDCCH in a case that the second proportion is less than the first proportion; wherein the second proportion is a ratio of a number of CCEs or REGs forming the second target PDCCH and located in a target bandwidth to a number of all CCEs or REGs forming the second target PDCCH, and the target bandwidth comprises a bandwidth of a frequency domain unit currently deployed in a communication system and/or a maximum bandwidth supported by the terminal, wherein the frequency domain unit comprises one of the following: cell, carrier, frequency band, and BWP.

11. The method according to claim 9 or 10, wherein a number of first parameters is same as a number of aggregation levels supported by the second target PDCCH, each aggregation level corresponds to one of the first parameters, and different aggregation levels correspond to different first parameters.

12. The method according to claim 9 or 10, wherein different aggregation levels supported by the second target PDCCH correspond to a same first parameter.

13. The method according to claim 7, wherein a time domain resource occupied by the second target CORESET comprises x OFDM symbols, wherein x is an integer greater than 3 and less than or equal to 14, x is an integer multiple of y, and y is a number of OFDM symbols contained in one REG.

14. The method according to claim 7, wherein the target parameter further comprises a second parameter, and the second parameter is used to inform the terminal of a manner of receiving the second target PDCCH in a case that a second target condition is met.

15. The method according to claim 14, wherein the second target condition comprises:
    that a frequency domain resource for transmitting the second target PDCCH exceeds a target bandwidth, wherein the target bandwidth comprises a bandwidth of a frequency domain unit currently deployed in a communication system and/or a maximum bandwidth supported by the terminal, and the frequency domain unit comprises one of the following: cell, carrier, frequency band, and BWP.

16. The method according to claim 14, wherein the manner of receiving the second target PDCCH comprises a rate matching manner or a puncturing manner.

17. The method according to any one of claims 7 to 10 and 13 to 16, wherein the second target CORESET is located on an initial BWP of the terminal.

18. The method according to any one of claims 7 to 10 and 13 to 16, wherein the second target CORESET is associated with at least one of the following search space SS sets:

    type-0 PDCCH CSS set;
    type-OA PDCCH CSS set;
    type-1 PDCCH CSS set;
    type-2 PDCCH CSS set;
    type-3 PDCCH CSS set; and
    USS set.

19. The method according to any one of claims 7 to 10 and 13 to 16, wherein the second target CORESET comprises CORESET#0.

20. The method according to any one of claims 7 to 10 and 13 to 16, wherein the second target CORESET comprises a CORESET other than CORESET#0.

21. A physical downlink control channel transmission method, comprising:

    selecting, by a network-side device, at least one CCE aggregation level from a plurality of target CCE aggregation levels of a target CSS set, wherein the target CSS set is configured through searchSpaceSIB 1, and the plurality of target CCE aggregation levels comprise: level 1 and level 2; and
    transmitting, by the network-side device, a third target PDCCH on a resource of a third target CORESET based on the selected at least one CCE aggregation level; wherein the third target CORESET is associated with the target CSS set.

22. The method according to claim 21, wherein the plurality of target CCE aggregation levels are specified by a protocol.

23. The method according to claim 21, wherein before the selecting, by a network-side device, at least one CCE aggregation level from a plurality of target CCE aggregation levels of a target CSS set, the method further comprises:
    configuring, by the network-side device, the target CSS set with the plurality of target CCE aggregation levels and a maximum number of PDCCH candidates corresponding to each target CCE aggregation level.

24. The method according to claim 23, wherein before the selecting, by a network-side device, at least one CCE aggregation level from a plurality of target CCE aggregation levels of a target CSS set, the method further comprises:

indicating, by the network-side device, that the target CCE aggregation level is used in a case that a third target condition is met; or

determining, by the network-side device according to agreement in a protocol, that the target CCE aggregation level is used in a case that the third target condition is met.

25. The method according to claim 24, wherein the third target condition comprises:
that a frequency domain resource occupied by the third target CORESET exceeds a target bandwidth, wherein the target bandwidth comprises a bandwidth of a frequency domain unit currently deployed in a communication system and/or a maximum bandwidth supported by a terminal, and the frequency domain unit comprises one of the following: cell, carrier, frequency band, and bandwidth part BWP.

26. The method according to claim 21, wherein the target CCE aggregation level further comprises a level 6.

27. The method according to any one of claims 21 to 26, wherein the third target CORESET is located on an initial BWP of the terminal.

28. The method according to any one of claims 21 to 26, wherein the third target CORESET is associated with at least one of the following search space SS sets:

type-0 PDCCH CSS set;
type-OA PDCCH CSS set;
type-1 PDCCH CSS set;
type-2 PDCCH CSS set;
type-3 PDCCH CSS set; and
USS set.

29. The method according to any one of claims 21 to 26, wherein the third target CORESET comprises CORESET#0.

30. The method according to any one of claims 21 to 26, wherein the third target CORESET comprises a CORESET other than CORESET#0.

31. A physical downlink control channel reception method, comprising:

obtaining, by a terminal, a CCE-REG mapping type of a first target CORESET, wherein the CCE-REG mapping type comprises: a non-interleaved mapping type; and

in a case that a first target condition is met, receiving and demodulating, by the terminal based on the CCE-REG mapping type being a non-interleaved mapping type, a first target PDCCH transmitted on a resource corresponding to the first target CORESET.

32. The method according to claim 31, wherein the first target condition comprises:
that a frequency domain resource occupied by the first target CORESET exceeds a target bandwidth, wherein the target bandwidth comprises a bandwidth of a frequency domain unit currently deployed in a communication system and/or a maximum bandwidth supported by a terminal, and the frequency domain unit comprises one of the following: cell, carrier, frequency band, and bandwidth part BWP.

33. The method according to claim 31, wherein the first target CORESET is located on an initial BWP of the terminal.

34. The method according to claim 31, wherein the CCE-REG mapping type of the first target CORESET is configured by a network-side device or specified by a protocol.

35. A physical downlink control channel reception method, comprising:

obtaining, by a terminal, a target parameter for a second target CORESET, wherein the target parameter comprises a first parameter, and the first parameter is a reference parameter for determining by the terminal whether to receive a second target PDCCH; and

determining, by the terminal based on the first parameter, whether to receive the second target PDCCH transmitted on a resource of the second target CORESET.

36. The method according to claim 35, wherein the first parameter comprises: a maximum coding rate; and the determining, by the terminal based on the first parameter, whether to receive the second target PDCCH transmitted on a resource of the second target CORESET comprises:

giving up, by the terminal, receiving or demodulating the second target PDCCH in a case that a target coding rate of the second target PDCCH is greater than or equal to the maximum coding rate; and
receiving and demodulating, by the terminal, the second target PDCCH in a case that the target coding rate of the second target PDCCH is less than the maximum coding rate.

37. The method according to claim 35, wherein the first parameter comprises a first number; and the determining, by the terminal based on the first parameter, whether to receive the second target PDCCH transmitted on a resource of the second target CORESET comprises:

receiving and demodulating, by the terminal, the second target PDCCH in a case that a second number is greater than or equal to the first number, wherein the second number is a number of CCEs or REGs forming the second target PDCCH and located in a target bandwidth, and the target bandwidth comprises a bandwidth of a frequency domain unit currently deployed in a communication system and/or a maximum bandwidth supported by the terminal, wherein the frequency domain unit comprises one of the following: cell, carrier, frequency band, and BWP; and
giving up, by the terminal, receiving and demodulating the second target PDCCH in a case that the second number is less than the first number.

38. The method according to claim 35, wherein the first parameter comprises a first proportion; and the determining, by the terminal based on the first parameter, whether to receive the second target PDCCH transmitted on a resource of the second target CORESET comprises:

receiving and demodulating, by the terminal, the second target PDCCH in a case that a second proportion is greater than or equal to the first proportion, wherein the second proportion is a ratio of a number of CCEs or REGs forming the second target PDCCH and located in a target bandwidth to a number of all CCEs or REGs forming the second target PDCCH, and the target bandwidth comprises a bandwidth of a frequency domain unit currently deployed in a communication system and/or a maximum bandwidth supported by the terminal, wherein the frequency domain unit comprises one of the following: cell, carrier, frequency band, and BWP; and
giving up, by the terminal, receiving and demodulating the second target PDCCH in a case that the second proportion is less than the first proportion.

39. The method according to claim 35, wherein the target parameter is configured by a network-side device or specified by a protocol.

40. The method according to claim 35, wherein the terminal does not expect to receive a PDCCH whose frequency domain resource exceeds a target bandwidth, wherein the target bandwidth comprises a bandwidth of a frequency domain unit currently deployed in a communication system and/or a maximum bandwidth supported by the terminal, and the frequency domain unit comprises one of the following: cell, carrier, frequency band, and BWP.

41. The method according to any one of claims 35 to 40, wherein the target parameter further comprises a second parameter, and the second parameter is used to inform the terminal of a manner of receiving the second target PDCCH in a case that a second target condition is met.

42. The method according to claim 41, wherein the second target condition comprises:
that a frequency domain resource for transmitting the second target PDCCH exceeds the target bandwidth, wherein the target bandwidth comprises a bandwidth of a frequency domain unit currently deployed in a communication system and/or a maximum bandwidth supported by the terminal, and the frequency domain unit comprises one of the following: cell, carrier, frequency band, and BWP.

43. The method according to any one of claims 35 to 40, wherein the second target PDCCH comprises a PDCCH transmitted on at least one the following:

type-0 PDCCH CSS set;
type-OA PDCCH CSS set;
type-1 PDCCH CSS set;
type-2 PDCCH CSS set;
type-3 PDCCH CSS set; and
USS set.

44. A physical downlink control channel reception method, comprising:
performing, by the terminal, blind detection on a third target PDCCH based on a plurality of target CCE aggregation levels of a target CSS set, wherein the third target PDCCH is transmitted on a resource of a third target CORESET, the target CSS set is configured through search Space SIB 1, the third target CORESET is associated with the target CSS set, and the plurality of target CCE aggregation levels comprise: level 1 and level 2.

45. The method according to claim 44, wherein the performing, by the terminal, blind detection on a third target PDCCH based on a plurality of target CCE aggregation levels of a target CSS set comprises:

performing, by the terminal, blind detection on the third target PDCCH based on the plurality of target CCE aggregation levels specified in a protocol; or
performing, by the terminal, blind detection on the third target PDCCH based on the plurality of target CCE aggregation levels configured by a network-side device.

46. The method according to claim 44, wherein the performing, by the terminal, blind detection on a third target PDCCH based on a plurality of target CCE aggregation levels of a target CSS set comprises:
performing, by the terminal according to an indication of a network-side device or agreement of a protocol, blind detection on the third target PDCCH based on the plurality of target CCE aggregation levels of the target CSS set in a case that a third target condition is met.

47. The method according to claim 46, wherein the third target condition comprises:
that a frequency domain resource occupied by the third target CORESET exceeds a target bandwidth, wherein the target bandwidth comprises a bandwidth of a frequency domain unit currently deployed in a communication system and/or a maximum bandwidth supported by the terminal, and the frequency domain unit comprises one of the following: cell, carrier, frequency band, and bandwidth part BWP.

48. The method according to claim 44, wherein the target CCE aggregation level further comprises a level 6.

49. A physical downlink control channel reception method, comprising:
in a case that a fourth target PDCCH exceeds a target bandwidth, receiving and demodulating, by a terminal, a first portion of the fourth target PDCCH, and giving up receiving or demodulating a second portion of the fourth target PDCCH, wherein the first portion is a portion that is of the fourth target PDCCH and that is transmitted on the target bandwidth, and the second portion is a portion that is of the fourth target PDCCH and that is transmitted on a frequency domain resource beyond the target bandwidth; the target bandwidth comprises a bandwidth of a frequency domain unit currently deployed in a communication system and/or the maximum bandwidth supported by the terminal, and the frequency domain unit comprises one of the following: cell, carrier, frequency band, and bandwidth part BWP.

50. The method according to claim 49, wherein the fourth target PDCCH comprises a PDCCH transmitted on at least one the following:

type-0 PDCCH CSS set;
type-OA PDCCH CSS set;
type-1 PDCCH CSS set;
type-2 PDCCH CSS set;
type-3 PDCCH CSS set; and
USS set.

51. A physical downlink control channel transmission apparatus, comprising:

a first obtaining module, configured to obtain a CCE-REG mapping type of a first target CORESET, wherein the CCE-REG mapping type comprises: a non-interleaved mapping type; and

a first transmission module, configured to transmit, based on the CCE-REG mapping type being a non-interleaved mapping type, a first target physical downlink control channel PDCCH on a resource corresponding to the first target CORESET.

52. A physical downlink control channel transmission apparatus, comprising:

a first configuration module, configured to configure a target parameter for a second target CORESET, wherein the target parameter comprises a first parameter, and the first parameter is a reference parameter for determining by a terminal whether to receive a second target PDCCH; and
a second transmission module, configured to transmit the second target PDCCH on a resource of the second target CORESET.

53. A physical downlink control channel transmission apparatus, comprising:

a selection module, configured to select at least one CCE aggregation level from a plurality of target CCE aggregation levels of a target CSS set, wherein the target CSS set is configured through searchSpaceSIB 1, and the plurality of target CCE aggregation levels comprise: level 1 and level 2; and
a third transmission module, configured to transmit a third target PDCCH on a resource of a third target CORESET based on the selected at least one CCE aggregation level; wherein the third target CORESET is associated with the target CSS set.

54. A physical downlink control channel reception apparatus, comprising:

a second obtaining module, configured to obtain a CCE-REG mapping type of a first target CORESET, wherein the CCE-REG mapping type comprises: a non-interleaved mapping type; and
a first receiving module, configured to: in a case that a first target condition is met, receive and demodulate, based on the CCE-REG mapping type being a non-interleaved mapping type, a first target PDCCH transmitted on a resource corresponding to the first target CORESET.

55. A physical downlink control channel reception apparatus, comprising:

a third obtaining module, configured to obtain a target parameter for a second target CORESET, wherein the target parameter comprises a first parameter, and the first parameter is a reference parameter for determining by a terminal whether to receive a second target PDCCH; and
a second receiving module, configured to determine, based on the first parameter, whether to receive the second target PDCCH transmitted on a resource of the second target CORESET.

56. A physical downlink control channel reception apparatus, comprising:

a fourth obtaining module, configured to obtain a plurality of target CCE aggregation levels of a target CSS set, wherein the target CSS set is configured through searchSpaceSIB1, and the plurality of target CCE aggregation levels comprise level 1 and level 2; and
a third receiving module, configured to perform blind detection on a third target PDCCH based on the plurality of target CCE aggregation levels, wherein the third target PDCCH is transmitted on a resource of a third target CORESET, and the third target CORESET is associated with the target CSS set.

57. A physical downlink control channel reception apparatus, comprising:

a determining module, configured to determine that a fourth target PDCCH exceed a target bandwidth, wherein the target bandwidth comprises a bandwidth of a frequency domain unit currently deployed in a communication system and/or a maximum bandwidth supported by a terminal, and the frequency domain unit comprises one of the following: cell, carrier, frequency band, and bandwidth part BWP; and
a fourth receiving module, configured to: in a case that the fourth target PDCCH exceeds the target bandwidth, receive and demodulate a first portion of the fourth target PDCCH, and give up receiving or demodulating a second portion of the fourth target PDCCH, wherein the first portion is a portion that is of the fourth target PDCCH and that is transmitted on the target bandwidth, and the second portion is a portion that is of the fourth target PDCCH and that is transmitted on a frequency domain resource beyond the target bandwidth.

58. A terminal, comprising a processor, a memory, and a program or instructions stored in the memory and executable on the processor, wherein when the program or the instructions are executed by the processor, the steps of the physical downlink control channel reception method according to any one of claims 31 to 50 are implemented.

59. A network-side device, comprising a processor, a memory, and a program or instructions stored in the memory and executable on the processor, wherein when the program or the instructions are executed by the processor, the steps of the physical downlink control channel transmission method according to any one of claims 1 to 30 are implemented.

60. A readable storage medium, wherein the readable storage medium stores a program or instructions, and when the program or instructions are executed by a processor, the steps of the physical downlink control channel transmission method according to any one of claims 1 to 30 are implemented, or the steps of the physical downlink control channel reception method according to any one of claims 31 to 50 are implemented.

61. A chip, comprising a processor and a communication interface, wherein the communication interface is coupled to the processor, and the processor is configured to execute a program or instructions to implement the steps of the physical downlink control channel transmission method according to any one of claims 1 to 30 or the steps of the physical downlink control channel reception method according to any one of claims 31 to 50.

62. A computer program product, wherein the computer program product is stored in a storage medium, and the computer program product is executed by at least one processor to implement the steps of the physical downlink control channel transmission method according to any one of claims 1 to 30 or the steps of the physical downlink control channel reception method according to any one of claims 31 to 50.

63. An electronic device, wherein the electronic device is configured to implement the steps of the physical downlink control channel transmission method according to any one of claims 1 to 30 or the steps of the physical downlink control channel reception method according to any one of claims 31 to 50.

FIG. 1

200

S210

A network-side device obtains a CCE-REG mapping type of a first target CORESET

S212

The network-side device transmits, based on the CCE-REG mapping type being a non-interleaved mapping type, a first target PDCCH on a resource corresponding to the first target CORESET

FIG. 2

FIG. 3a

FIG. 3b

400

S410

A terminal obtains a CCE-REG mapping type of a first target CORESET

S412

In a case that a first target condition is satisfied, the terminal receives and demodulates, based on the CCE-REG mapping type being a non-interleaved mapping type, a first target PDCCH transmitted on a resource corresponding to the first target CORESET

FIG. 4

500

S510

A network-side device configures a target parameter for a second target CORESET

S512

The network-side device transmits the second target PDCCH on a resource of the second target CORESET

FIG. 5

600

S610

A terminal obtains a target parameter for a second target CORESET

S612

The terminal determines, based on the first parameter, whether to receive the second target PDCCH transmitted on a resource of the second target CORESET

FIG. 6

700

S710

A network-side device selects at least one CCE aggregation level from a plurality of target CCE aggregation levels of a target CSS set

S712

The network-side device transmits a third target PDCCH on a resource of a third target CORESET based on the selected at least one CCE aggregation level

FIG. 7

800

S810

The terminal performs blind detection on a third target PDCCH based on a plurality of target CCE aggregation levels of a target CSS set

FIG. 8

900

S910

In a case that a fourth target PDCCH exceeds a target bandwidth, a terminal receives and demodulates a first portion of the fourth target PDCCH, and gives up receiving or demodulating a second portion of the fourth target PDCCH

FIG. 9

1000

1001

First obtaining module

1002

First transmission module

FIG. 10

1100

1101

First configuration module

1102

Second transmission module

FIG. 11

1200

1201

Selection module

1202

Third transmission module

FIG. 12

1300

1301

Second obtaining module

1302

First receiving module

FIG. 13

1400

1401

Third obtaining module

1402

Second receiving module

FIG. 14

1500

1501

Fourth obtaining module

1502

Third receiving module

FIG. 15

Determining module — 1601

Fourth receiving module — 1602

1600

FIG. 16

Communication device — 1700

1701 — Processor ⟺ Memory — 1702

FIG. 17

1800

FIG. 18

FIG. 19

## INTERNATIONAL SEARCH REPORT

| International application No. |
| --- |
| **PCT/CN2022/112263** |

**A.    CLASSIFICATION OF SUBJECT MATTER**

H04W 72/04(2009.01)i

According to International Patent Classification (IPC) or to both national classification and IPC

**B.    FIELDS SEARCHED**

Minimum documentation searched (classification system followed by classification symbols)

H04W; H04Q; H04L

Documentation searched other than minimum documentation to the extent that such documents are included in the fields searched

Electronic data base consulted during the international search (name of data base and, where practicable, search terms used)

CNPAT, CNKI, WPI, EPODOC, 3GPP: 控制资源集, 物理下行控制信道, 控制信道单元, 资源单元组, 非交织, 公共搜索空间, 带宽, 聚合, 级别, 等级, 放弃, 丢弃, 解调, 降低能力, 部分, 共享, CORESET, PDCCH, CCE, REG, non-interleave, CSS, common SS, bandwidth, BWP, SIB, aggregation level, discard, demodulate, RedCap, reduced capability, part, share

**C.    DOCUMENTS CONSIDERED TO BE RELEVANT**

| Category* | Citation of document, with indication, where appropriate, of the relevant passages | Relevant to claim No. |
| --- | --- | --- |
| X | CN 109495234 A (BEIJING NORTHERN FIBERHOME TECHNOLOGIES CO., LTD.) 19 March 2019 (2019-03-19) <br> description, paragraphs [0006]-[0061] and [0072]-[0142] | 1-6, 21-34, 44-48, 51, 53-54, 56, 58-63 |
| X | WO 2020257437 A1 (QUALCOMM INC.) 24 December 2020 (2020-12-24) <br> description, paragraphs [0035]-[0036] | 7-20, 35-43, 52, 55, 58-63 |
| X | US 2021100003 A1 (QUALCOMM INC.) 01 April 2021 (2021-04-01) <br> description, paragraphs [0154]-[0161] | 49-50, 57-58, 60-63 |
| A | CN 111934834 A (ZTE CORP.) 13 November 2020 (2020-11-13) <br> entire document | 1-63 |
| A | VIVO 等 (VIVO et al.). "Discussion on Reduced Maximum UE Bandwidth" <br> *3GPP TSG RAN WG1 #106-e R1-2106601*, 07 August 2021 (2021-08-07), <br> entire document | 1-63 |

☐ Further documents are listed in the continuation of Box C.          ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **26 October 2022** | **11 November 2022** |

| Name and mailing address of the ISA/CN | Authorized officer |
| --- | --- |
| **China National Intellectual Property Administration (ISA/CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/112263**

| Patent document cited in search report | | | Publication date (day/month/year) | Patent family member(s) | | | Publication date (day/month/year) |
|---|---|---|---|---|---|---|---|
| CN | 109495234 | A | 19 March 2019 | None | | | |
| WO | 2020257437 | A1 | 24 December 2020 | EP | 3987705 | A1 | 27 April 2022 |
| | | | | US | 2020404600 | A1 | 24 December 2020 |
| | | | | CN | 114128332 | A | 01 March 2022 |
| | | | | KR | 20220023997 | A | 03 March 2022 |
| | | | | JP | 2022536535 | A | 17 August 2022 |
| US | 2021100003 | A1 | 01 April 2021 | EP | 4035301 | A1 | 03 August 2022 |
| | | | | CN | 114424602 | A | 29 April 2022 |
| | | | | WO | 2021062151 | A1 | 01 April 2021 |
| CN | 111934834 | A | 13 November 2020 | WO | 2022028192 | A1 | 10 February 2022 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110938636